# EUROPÄISCHE PATENTSCHRIFT

(11) **EP 2 557 336 B1**
(45) Veröffentlichungstag und Bekanntmachung des Hinweises auf die Patenterteilung: **07.11.2018**
(21) Anmeldenummer: 12191666.2
(22) Anmeldetag: 20.07.2011
(51) Int. Cl.: F16H 61/688, F16D 48/02, F16H 61/02

(54) **Getriebehydraulik eines Doppelkupplungsgetriebes und Steuerungsverfahren mit hydraulischen Ventilen für ein Doppelkupplungsgetriebe**
Hydraulic control of a double clutch transmission and control method thereof
Commande hydraulique pour boîte de vitesses à double embrayage et son procédé de contrôle

(30) Priorität: 21.07.2010 DE 102010036545; 31.08.2010 DE 102010037243
(43) Veröffentlichungstag der Anmeldung: 13.02.2013
(62) Teilanmeldung aus: 11174667.3
(73) Patentinhaber: hofer mechatronik GmbH, 72622 Nürtingen (DE)
(72) Erfinder: Naumann, Ralf, 73275 Ohmden (DE)
(74) Vertreter: Cremer, Christian

(56) Entgegenhaltungen:
- EP-A1- 1 449 708
- EP-A2- 1 450 076
- WO-A1-03/040580
- WO-A1-2009/111220
- DE-A1- 10 134 115
- DE-A1-102005 006 431
- DE-A1-102006 016 397
- DE-A1-102007 023 072

## Beschreibung

Die vorliegende Erfindung betrifft eine hydraulische Steuerung eines Doppelkupplungsgetriebes und ein Verfahren zum Betrieb besagter hydraulischen Steuerung.

### Stand der Technik

Getriebe mit mehreren Kupplungen in Kraftfahrzeugen werden unter anderem unter dem Schlagwort "Doppelkupplungsgetriebe" angepriesen. Mit diesem Begriff werden unterschiedlichste Varianten bezeichnet, die fast nicht mehr zählbar sind. Die Varianten unterscheiden sich unter anderem durch die Anzahl an Gängen, zum Beispiel ob sechs, sieben oder mehr Vorwärtsgänge vorhanden sind, die Art und Weise, wie ein Rückwärtsgang in dem Getriebe realisiert ist, und durch die Betriebsweise des Getriebes.

Beispielhaft mögen einige Doppelkupplungsgetriebe durch ihre druckschriftlichen Beschreibungen angesprochen werden. So schlägt zum Beispiel die FR 2 848 629 B1 (Patentinhaberin: Renault SAS; Anmeldetag: 12.12.2002) vor, mit einer gemeinsamen Schaltgabel die diversen Gänge einlegen zu können. Ereignet sich bei einem solchen Getriebe ein Schaden an der Schaltachse, so dürfte ein Weiterbetrieb eines Kraftfahrzeuges mit einer solchen Art Doppelkupplungsgetriebe in vielen Fällen ausgeschlossen sein.

Die europäische Patentanmeldung EP 2 055 989 A1 (Anmelderin: Ford Global Technologies LLC; Anmeldetag: 29.10.2007) beschreibt ein Doppelkupplungsgetriebe, bei dem die Gänge in einer ganz bestimmten Weise auf den Vorgelegewellen angeordnet sind, wobei der sechste Gang und der Rückwärtsgang durch gemeinsame Zahnradpaare gebildet werden. Von dem jeweils gleichen Antriebsrad soll durch ein erstes Antriebsrad sowohl der dritte als auch der fünfte Gang und durch ein zweites Antriebsrad sowohl der vierte als auch der sechste Gang angetrieben werden. Bei Teilausfällen von Getrieben, die gemäß der Beschreibung der EP 2 055 989 A1 aufgebaut sind, dürfte eine Manövrierbarkeit des Fahrzeuges in vielen Fällen aufgrund der Gangverteilungen und der gewählten Radsatzpaarbildungen ausgeschlossen sein. In ähnlicher Weise schlägt die DE 10 2007 010 292 A1 (Anmelderin: Audi AG; Anmeldetag: 02.03.2007) vor, Gangstufen je eines Teilgetriebes einander benachbart anzuordnen und mittels eines gemeinsamen Aktuators schaltbar oder vorwählbar auszuführen. Tritt eine Schwierigkeit in der Steuerbarkeit eines solchen Aktuators auf, so ist nicht nur eine Gangstufe eines Teilgetriebes betroffen, sondern einander benachbart angeordnete Gangstufen lassen sich nicht mehr steuern, denn der gemeinsame Aktuator ist für die benachbarten Gänge manövrierunfähig.

Darüber hinaus droht bei vielen Doppelkupplungsgetrieben die Gefahr, sollte bei einem Teilgetriebe die Möglichkeit gegeben sein, dass zwei unterschiedliche Gänge gleichzeitig eingelegt sind, dass das Getriebe mechanisch zerstört wird. Viele Entwickler von Doppelkupplungsgetrieben tendieren dazu, Sicherheits- und Überwachungsfunktionen in ein Steuergerät, eine Steuerungseinheit, softwaremäßig zu verlagern, sodass im Ergebnis das Steuergerät die Beschädigungen des Getriebes verhindern soll. Wie mit unterschiedlichen "Flags", die softwaremäßig zu setzen sind, gearbeitet werden muss, damit nicht unerwünschte Gangwechsel, insbesondere zwischen einem Vorwärtsgang und einem Rückwärtsgang, bei den zuvor beschriebenen Getrieben stattfinden können, wird in der US 2009 045 026 A1 (Anmelderin: Kanzaki Kokyukoki Mfg. Co. Ltd.; Prioritätstag: 17.08.2007), auch als EP 2 025 972 A2 veröffentlicht, beschrieben.

Ein weiteres, umfangreicheres Zusammenspiel zwischen Steuergerät, das in der Patentanmeldung EP 1 450 076 A2 (Anmelderin: BorgWarner Inc.; Prioritätstage: 21.02.2003 und 26.11.2003) und EP 1 449 708 A1 (Anmelderin: BorgWarner Inc.; Prioritätstag: 21.02.2003) als ECU bezeichnet ist, und einer einige Ventile umfassenden hydraulischen Kupplungssteuerung kann diesen Druckschriften entnommen werden. Auch diese Druckschriften sind stark von der Überlegung geleitet, dass softwaremäßig alles das abzufangen ist, was durch die hydraulische Schaltungsgestaltung oder durch das Getriebe selbst an Fehlerfällen auftreten kann. Die Fehlerverursacher sind nicht so auszulegen, dass diese ihre eigenen Fehler auch wieder abfangen können.

In der hydraulischen Steuerung eines Doppelkupplungsgetriebes aus der Druckschrift WO 2009/111 220 A1 (Anmelderin: BorgWarner Inc.; Prioritätstag: 04.03.2008) wird druckbeaufschlagte Flüssigkeit sowohl zur Betätigung der Kupplungen als auch für die Kühlung der Kupplungen verwendet. Die Kupplungsbetätigung erfolgt durch Ansteuerung eines 3/2-Ventils, worauf insbesondere aus den Figuren 2 bis 5 der WO 2009/111220 A1 geschlossen werden kann. In den Leitungen zu den Kupplungen ist hierbei jeweils ein Dämpfer angeordnet, durch den eine Druckbegrenzung auf einen maximalen Betätigungsdruck bewirkt wird.

In ähnlicher Weise sind in der WO 03/040 580 A1 (Anmelderin: Dr. Ing. H.C. F. Porsche AG; Prioritätstag: 9.11.2001) den Kupplungen jeweils Pulsationsdämpfer zugeordnet, die Druckspitzen abfangen und die Einregelung des Solldrucks verbessern.

Bei der hydraulischen Steuerung für ein Doppelkupplungsgetriebe gemäß der Druckschrift DE 10 2008 046 350 A1 (Anmelderin: Volkswagen AG; Anmeldetag: 09.09.2008) und für eine Kupplung oder einen Gangsteller gemäß der DE 10 2005 006 431 A1 (Anmelderin: Volkswagen AG; Anmeldetag: 12.02.2005) wird über jeweils ein Vorsteuerventil und ein Volumenstellventil, das auch als Durchflussventil bezeichnet ist, ein Aktuator betätigt. Die Ventile sind als 3/3-Ventile ausgeführt. Dabei ist in der Druckschrift DE 10 2005 006 431 A1 parallel zu dem Durchflussventil, das der Kupplung zugeordnet ist, ein Rückschlag- bzw. Sicherheitsventil mit einem Hysteresebereich vorgesehen.

In der Druckschrift DE 10 2007 023 072 A1 (Anmelderin: Volkswagen AG; Anmeldetag: 16.05.2007) werden für die Druckvorsteuerung ebenfalls 3/3-Ventile als sogenannte Teilgetriebedruck-Regelventile verwendet. Zwischen dem Teilgetriebedruckregelventil und der Kupplung ist jeweils noch ein 3/3-Steuerungsventil für eine Begrenzung des Druckmittelvolumenstromes und damit für eine Beschränkung der Stellgeschwindigkeit des Kupplungsstellers angeordnet.

In dem Hydraulikkreis der DE 101 34 115 A1 (Anmelderin: Volkswagen AG; Anmeldetag: 13.07.2001), welche alle Merkmale des Oberbegriffs des Anspruchs 1 offenbart, ist den Kupplungszylindern jeweils ein proportionales Stromventil vorgelagert. Diese proportionalen Stromventile regeln über ihre Drosselwirkung die Bewegungsgeschwindigkeit des Strömungsmittels innerhalb des Hydraulikkreises, womit der "Kisspoint" der Kupplungen angefahren wird. Diesen Stromventilen ist jeweils ein Vorsteuerventil vorgelagert. Durch das Vorsteuerventil ist zugleich eine Druckbeaufschlagung eines der Stromventile und der parallel zum Stromventil den Schaltzylindern zugeordneten Druckregelventilen möglich.

Ein robusteres hydraulisches System für mehrere Kupplungen umfassende Getriebeanordnungen lässt sich der DE 10 2006 016 397 A1 (Anmelderin: hofer mechatronik GmbH; Anmeldetag: 07.04.2006) entnehmen. Wie den Figuren 7, 8, 9 und 10 zu entnehmen ist, hängen die einzelnen hydraulischen Teilkreise, wie die Kreise für die Kupplungsbetätigungen und die Aktuatorenkreisläufe für die Muffenbetätigungen, an einer zentralen Versorgungsleitung, die durch eine Hydraulikpumpe, die auch als Öldruckpumpe zu bezeichnen ist, beaufschlagbar ist. Den hydraulischen Plänen ist das Konzept zu entnehmen, dass die einzelnen Funktionsgruppen, wie zum Beispiel das erste Teilgetriebe, das zweite Teilgetriebe, die erste Kupplung und die zweite Kupplung, möglichst unabhängig von den anderen hydraulisch angesteuerten Baugruppen betätigbar bleiben, solange die Pumpe den hydraulischen Druck halten kann. Aus den hydraulischen Plänen sind einige integrierte Sicherheitsfunktionen herauszulesen.

Von diesem zukunftsweisenden Konzept wieder abgewandt, propagiert die WO 2008 108 977 A1 (Anmelderin: BorgWarner Inc.; Prioritätstag: 02.03.2007), auch als CN 101 583 510 A bekannt, die Verquickung der natürlichen, aufgrund der mechanischen Gegebenheiten sich bildenden Teilfunktionen durch eine gemeinsame hydraulische Ansteuerung, zum Beispiel indem zwei hintereinander angeordnete Multiplexventile verwendet werden, mit denen die Muffenwahl realisiert wird. Die Baugruppen beziehen das Drucköl von einer gemeinsamen, durch eine Pumpe aufgeladenen Zentralleitung. Anschließend wird aber das gesamte Getriebe durch möglichst komplex realisierte Ventile angesteuert. Die Beschreibung scheint eher dem Prinzip der Ventileinsparung als dem Prinzip der gesteigerten hydraulischen Sicherheitsfunktionsintegration verschrieben zu sein.

Die US 5 367 914 A (Patentinhaberin: General Motors Corp.; Anmeldetag: 09.02.1993) erklärt einen Vorteil der Doppelkupplungsgetriebe u. a. durch den Hauptanspruch mit der Möglichkeit der Überblendfunktion während eines Gangwechsels.

Dementsprechend befasst sich die EP 1 717 473 A1 (Anmelderin: Hoerbinger Antriebstechnik GmbH; Anmeldetag: 25.04.2005), auch als CN 101 163 901 A bekannt, mit einem Auszug aus der hydraulischen Ansteuerung einer zwei Kupplungen umfassenden Getriebeeinheit und schlägt vor, das als Füllventil bezeichnete vorgeschaltete Ventil als Proportional-Regelventil auszuführen, während das zweite Ventil, das sich unmittelbar anschließen sollte, ein Zweistellungsventil sein sollte. Das zweite Ventil soll ein Ablassventil sein. Zwar können auch in einer solchen Getriebeteilsteuerung einige Sicherheitsfunktionen durch die Ventilanordnung realisiert werden, was aber mit zahlreichen Nachteilen erkauft wird. Die eigentliche Regelfunktion wird von den Proportional-Regelventilen ausgeübt. Von diesen ist eine ausreichende Leitungslänge bis zu den hydraulisch zu betätigenden Kupplungen vorzuhalten, damit die Ablassventile in der Kupplungszuleitung verbaut werden können. Hieraus ergeben sich wiederum weitere Nachteile, wie z. B. die erhöhte Reaktionszeit, die geringere Regelgenauigkeit und ein mitabzudeckender Druckverlust.

Eine alternative Ausgestaltung zu dem Schaltplan der EP 1 717 473 A1 zeigt die EP 1 449 708 B1 (Patentinhaberin: BorgWarner; Prioritätstag: 21.02.2003) in ihrer Figur zwei, bei der zwei Proportional-Regelventile pro Kupplung in Reihe geschaltet sind, wobei das erste Proportional-Regelventil mit einem Pilotventil gesteuert wird. Im Ergebnis bedeutet es, dass eine solche Schaltung pro Kupplung drei Ventile benötigt.

Eine weitere Alternative für die Ausgestaltung eines Hydraulikkreises zur Steuerung eines Antriebsstranges kann der WO 2004/097 265 A1 (Anmelderin: Getrag Getriebe- und Zahnradfabrik Hermann Hagenmeyer GmbH & Cie KG; Prioritätstag: 30.04.2003) entnommen werden. Darin wird mittels eines proportionalen Wegeventils ein hydraulischer Zweig einer Getriebegruppe mit einer Trennkupplung und mehreren Schaltkupplungen und jeweils zugeordneten proportionalen Regelventilen für verschiedene Gangstufen des Doppelkupplungsgetriebes mit einer Pumpe verbunden.

Die in den zuvor zitierten Druckschriften dargestellten Varianten von Doppelkupplungsgetrieben dienen der Verdeutlichung, für welche Art von Getrieben die vorliegende Erfindung eingesetzt werden kann. Zur Vermeidung von Wiederholungen sei auf die zitierten Druckschriften verwiesen, wenn grundlegende mechanische, hydraulische und elektrotechnische bzw. steuerungstechnische Aspekte von Doppelkupplungsgetrieben für die nachfolgende Erfindungsbeschreibung zu definieren sind.

### Technisches Gebiet

Nicht zuletzt dank des gesteigerten Fahrgefühls bei lastunterbrechungsfreiem Gangwechsel erfreuen sich Doppelkupplungsgetriebe besonderer Beliebtheit in leistungsstarken bzw. mit PSstarken Motoren ausgestatteten Personenkraftfahrzeugen, bei denen ein Drehmoment von mehreren hundert Newtonmetern über die Kupplung auf die Räder zu bringen ist. Bei hohen Leistungen und hohen Drehmomenten ist die Notwendigkeit der Integration von Sicherheitsfunktionen und Sicherheitsaspekten in jede funktionelle Schicht und jede Entwurfsebene des Getriebes erst recht erwünscht.

Ein Doppelkupplungsgetriebe weist in der Regel zwei Getriebeeingangswellen auf, denen jeweils eine separate Kupplung und eine Gruppe von Gangstufen zugeordnet sind. In einer besonders vorteilhaften Radsatzanordnung umfasst eine Gruppe die Gangstufen mit ungerader Ordnungszahl, während die andere Gruppe die Gangstufen mit gerader Ordnungszahl einschließlich des Rückwärtsganges aufweist.

In einem derart ausgebildeten Doppelkupplungsgetriebe besteht ein Schaltvorgang, d. h. ein Wechsel von einem wirksamen Quellgang in einen nächsthöheren oder nächstniedrigeren Zielgang, aus mehreren Stufen. Als erstes wird ein Zielgang eingelegt, was z. B. über eine entsprechende Schaltmuffe und eine einem Gangrad des Zielganges zugeordnete synchronisierte Gangschaltkupplung bewerkstelligt werden kann. Anschließend erfolgt ein überschnittenes Öffnen einer der Getriebeeingangswelle des Quellganges zugeordneten ersten Kupplung und Schließen einer der Getriebeeingangswelle des Zielganges zugeordneten zweiten Kupplung. Außerhalb der Schaltvorgänge erfolgt die Kraftübertragung jeweils wechselweise über eine der Getriebeeingangswellen.

Ein wesentlicher Vorteil eines solchen Doppelkupplungsgetriebes gegenüber einem konventionellen Stufenwechselgetriebe liegt in den weitgehend zugkraftunterbrechungsfreien Schaltvorgängen.

Ein unmittelbares Ergebnis ist ein besseres Beschleunigungsvermögen im Zugbetrieb und ein besseres Verzögerungsvermögen im Schubbetrieb. Darüber hinaus werden durch eine Überbrückung von Lastspielen zwischen Bauteilen des Antriebsstranges bedingte Schlaggeräusche weitgehend vermieden. Als wichtiger Aspekt für die Benutzer von Fahrzeugen mit Doppelkupplungsgetrieben ist auch der Aspekt des Fahrkomforts, der dadurch verbessert ist.

Da bei manueller Betätigung von zwei Motorkupplungen und der Schaltung der Gänge mit vorübergehend zwei gleichzeitig eingelegten Gängen ein erheblicher mechanischer Aufwand erforderlich wäre, sind Doppelkupplungsgetriebe zumeist automatisiert ausgebildet. Dabei erfolgt sowohl die Betätigung der Motorkupplungen als auch das Schalten der Gänge über zugeordnete Hilfsantriebe, die z. B. elektromagnetisch, elektromotorisch, hydraulisch oder in anderer, z. B. gemischter Weise, betätigbar sein können.

Eine hydraulische Steuerung eines Getriebes mit mehreren Kupplungen, insbesondere eines Doppelkupplungsgetriebes, erfordert einen höheren Aufwand an Steuermechanismen im Vergleich zu herkömmlichen Einkupplungsgetrieben. Bei hydraulischer Steuerung eines Getriebes können Schaltmuffen und Kupplungen des Getriebes durch Schaltaktuatoren, z. B. Schaltzylinder der Muffen, z. B. doppelseitig ansteuerbare Schaltzylinder, und Hydraulikzylinder der Kupplungen über Druckventile betätigt werden.

Die Sicherheitsaspekte betreffen sowohl ein zuverlässiges Funktionieren des Getriebes im Normalbetriebsmodus als auch ein Verhalten des Getriebes bei Ausfall eines Steuerungselementes und eine Möglichkeit zur weiteren Betätigung des Getriebes in einem Notbetriebmodus. Dabei treten insbesondere bei Doppelkupplungsgetrieben zunehmend Probleme einer sicheren Arbeit des Getriebes in Erscheinung, die durch eine große Anzahl von Steuerungselementen oder durch einen komplizierten Aufbau eines oder mehrerer Steuerungselemente hervorgerufen werden.

### Problemstellung

Es ist erstrebenswert, eine hydraulisch steuerbare Doppelkupplungseinrichtung oder eine hydraulisch steuerbare Mehrkupplungseinrichtung eines Getriebes für ein Kraftfahrzeug so zu gestalten, dass die hydraulische Steuerung sowohl in Getrieben leistungsstarker Antriebsstränge als auch kleinmotorigen und unter erhöhten wirtschaftlichen Zwängen stehenden Antriebssträngen eingebaut werden kann und trotzdem ein hohes Maß an integrierter Sicherheit aufgrund des Schaltungsentwurfs vorhanden ist.

### Erfindungsbeschreibung

Die erfindungsgemäße Aufgabe wird durch eine hydraulische Steuerung eines Getriebes nach Anspruch 1 gelöst. Ein vorteilhaftes Verfahren zum Betrieb der besagten hydraulischen Steuerung wird in Anspruch 15 offenbart. Vorteilhafte Weiterbildungen lassen sich den abhängigen Ansprüchen entnehmen. Viele integrierte Sicherheitsfunktionen sind aus den hydraulischen Plänen herauszulesen. Ausgehend von den Anforderungen der Sicherheit und Wirtschaftlichkeit ist dem hydraulischen Aufbau das Konzept zugrunde gelegt, dass die einzelnen Funktionsgruppen, wie zum Beispiel das erste Teilgetriebe, das zweite Teilgetriebe, die erste Kupplung und die zweite Kupplung, möglichst unabhängig von anderen hydraulisch angesteuerten Baugruppen betätigbar bleiben.

Das Getriebe ist zum Einsatz in einem Kraftfahrzeug geeignet, weil es die kraftfahrzeugspezifischen Sicherheitsanforderungen in einem besonderen Maße berücksichtigt. So wie standardmäßig und in üblicher Weise ein Getriebe realisiert ist, hat das erfindungsgemäße Getriebe mehrere Schaltmuffen. Die mehreren Schaltmuffen sind in dem Schaltgetriebe angeordnet, damit ein einzelner Gang ein- oder ausgelegt werden kann. Das Schaltgetriebe weist daher mehrere Schaltmuffen als Elemente für die Gangwahl auf. Das Getriebe ist mit einer mehrere Kupplungen und Kupplungszylinder umfassenden Kupplungseinrichtung beeinflussbar.

Die hydraulische Einrichtung des Getriebes umfasst neben einer Druckmittelquelle mit einem Druckmittel, z. B. einer Anordnung mit einer Ölpumpe bzw. Öldruckpumpe oder mehreren Ölpumpen, unterschiedliche hydraulische Steuerungselemente mit hydraulischen Zuleitungen, Ableitungen und inneren Leitungen, Verbindungen und Wegen für ein Druckmittel, z. B. für Öl, das aus einem Ölsumpf bzw. Tank an einer Niederdruckseite einer Pumpe für Öl eingesaugt wird und als Drucköl von einer Hochdruckseite einer Ölpumpe in eine Drucköl-Zuleitung eingepumpt wird, und nach einer Zirkulation in Druckölzu- und -ableitungen (wenigstens teilweise) zu einem Druckölsumpf mit einem niedrigen Öldruck kommt. Der tiefste Bereich des Getriebes, in dem sich das Hydraulikmittel sammelt, wird hinlänglich als Tank bezeichnet, obwohl auch Getriebebauformen bekannt sind, die mit gesonderten Tanks arbeiten.

Um bessere dynamische Eigenschaften des Getriebes zu erzielen, sind die mehreren Muffen auf mehreren Teilgetrieben, z. B. wenigstens auf einem ersten Teilgetriebe und einem zweiten Teilgetriebe des Schaltgetriebes, verteilt.

Dabei arbeitet das mit mehreren Schaltmuffen ausgebildete Schaltgetriebe mit einer mehrere Kupplungen umfassenden Doppelkupplungseinrichtung zusammen. Die mehrere Kupplungen umfassende Doppelkupplungseinrichtung hat wenigstens eine erste Kupplung mit einem ersten Hydraulikzylinder und wenigstens eine zweite Kupplung mit einem zweiten Hydraulikzylinder. Mit dieser Doppelkupplungseinrichtung sind ein erstes Teilgetriebe und ein zweites Teilgetriebe des Schaltgetriebes beeinflussbar. Dabei kann z. B. eine erste Kupplung ein erstes Teilgetriebe und eine zweite Kupplung ein zweites Teilgetriebe beeinflussen. Dies kann abhängig vom Betriebsvorgang zu unterschiedlichen Zeitpunkten oder in sich überschneidenden Zeitintervallen oder sogar gleichzeitig, z. B. synchron, geschehen oder durchgeführt werden. Dabei kann z. B. ein Vorgang eines Gangausschaltens in einem Teilgetriebe und ein Vorgang eines Gangeinschaltens in einem anderen Teilgetriebe mit einer großen Flexibilität durchgeführt werden.

Die hydraulische Steuerung eines Doppelkupplungsgetriebes umfasst wenigstens eine erste und eine zweite hydraulische Kupplung. Mit dem Begriff "hydraulische Kupplungen" werden solche Kupplungen bezeichnet, die wenigstens eine hydraulische Funktionsgruppe umfassen oder auf hydraulische Weise arbeiten. In einer Ausgestaltung werden damit also Nasskupplungen bezeichnet, in einer weiteren Ausgestaltung werden mit dem Begriff "hydraulische Kupplung" mit einem hydraulischen Betätigungszylinder ausgestattete Kupplungen bezeichnet. Hierfür steht das Hydraulikmedium unter Druck.

Nach einem Aspekt der vorliegenden Erfindung sind in der Steuerung des Doppelkupplungsgetriebes Proportional-Regelventile, speziell hier Proportional-Druckregelventile, verbaut. Ein Proportional-Regelventil ist der ersten Kupplung zugeordnet. Ein Proportional-Regelventil ist der zweiten Kupplung zugeordnet. Mit Hilfe des Proportional-Regelventils kann der einzunehmende Schließgrad der Kupplung eingestellt werden. Zwischen Proportional-Regelventil und der ihr zugeordneten Kupplung gibt es keine weiteren Ventile. Das Proportional-Regelventil wirkt unmittelbar auf die Kupplung. Es ist eine direkte hydraulische Verbindung zwischen dem Proportional-Regelventil und der Kupplung gegeben. Auf der Zuleitungsseite jedoch, der Druckversorgungsseite des Proportional-Regelventils, ist ein weiteres Ventil vorgesehen. Das weitere Ventil dient als trennebenenbildendes Ventil. Das vor dem Proportional-Regelventil vorgeschaltete Ventil sorgt für eine Abkopplung der zentralen Druckversorgungsleitung, in der das Hydraulikmittel unter dem Betriebsdruck der Kupplungssteuerungseinrichtung steht. Durch die Schaffung einer zweiten steuerungstechnischen Ebene kann die zentrale Druckversorgungsleitung von jedem einzelnen hydraulischen Strang abgekoppelt werden. Die Druckversorgungsleitung ist absperrbar gegenüber jedem einzelnen Strang, hierfür ist ein Sperrventil für jede Kupplung vorhanden. Das Sperrventil ist ein möglichst einfach gestaltetes Ventil, sodass das Absperren zuverlässig funktioniert. Einfache Ventile sind z. B. 2/2-Ventile und 4/2-Ventile.

Die Ventile, über die die exakte Schließposition der Kupplungen einstellbar sind, sind - hydraulisch gesehen - unmittelbar vor den Kupplungen angeordnet. Von der zentralen Druckversorgungsleitung können die Ventile getrennt werden. Die Druckversorgungsleitung führt das unter Druck stehende Hydraulikmittel an jeden der Stränge heran, an denen wenigstens ein Verbraucher, wie ein Kupplungsbetätigungszylinder, sitzt.

Eine solche Hydraulikschaltung kann positiv dadurch betrieben werden, dass auch Fehlerfälle abgefangen werden können. In einem Fehlerfall kann kurzfristig, das bedeutet, in weniger als 10 ms, ein Trennventil betätigt werden. Die hinter dem Trennventil angeordnete hydraulische Strecke wird von der zentralen Druckversorgungsleitung abgetrennt. Die zentrale Druckversorgungsleitung, in einer besonders vorteilhaften Ausgestaltung mit einem Druckölaufbereitungskreislauf, liegt durch die Trennventileinbettung wie in einem Kokon. Im Fehlerfall, wenn die Hydraulik in einem Bereich nicht wunschgemäß arbeiten oder reagieren sollte, ist mit Hilfe eines Trennventils die Hydraulikmittelversorgung für das Proportional-Regelventil, mit dem die Kupplung betätigbar ist, von der Druckmittelversorgungsleitung abgekoppelt.

Das Getriebe kann als Doppelkupplungsgetriebe bezeichnet werden, weil es wenigstens zwei Kupplungen aufweist, die jeweils einem eigenen Teilgetriebe zugeordnet sind. Räumlich besonders vorteilhaft sind Doppelkupplungsgetriebe, bei denen die Kupplungsantriebswellen koaxial angeordnet sind, insbesondere als eine innere Welle für die eine Kupplung und als diese in Form einer Hohlwelle umschließenden Welle für die zweite Kupplung. Das erste Teilgetriebe umfasst einen ersten Satz Gänge, das zweite Teilgetriebe umfasst einen zweiten Satz Gänge. Eine besonders vorteilhafte Anordnung ergibt sich daraus, wenn der erste, der dritte und der fünfte Gang auf dem ersten Teilgetriebe angeordnet sind und die dazu als geraden Gänge bezeichneten Gänge wie der zweite, der vierte und der sechste Gang durch das zweite Teilgetriebe gebildet werden. In einem der beiden Teilgetriebe liegt zudem der Rückwärtsgang, der somit keine gesonderte Rückwärtsgangwelle mehr benötigt, sondern auf der gleichen Vorgelegewelle angesiedelt ist wie die übrigen Gänge des Teilgetriebes.

Die Hydraulik arbeitet auf einem gewissen Druckniveau, zum Beispiel mit einem Systemdruck zwischen 15 und 30 bar, der möglichst in einem engen Druckband konstant gehalten wird, das kann zum Beispiel ein Druck von 25 bar sein. Alternativ kann der Druck natürlich auch nur auf ein Niveau von 18 bar gelegt werden.

Das als Doppelkupplungsgetriebe gestaltete Getriebe bezieht den Betriebsdruck für die Betätigung der Aktuatoren aus einer Öldruckpumpe. Viele Öldruckpumpen, sofern sie von dem Verbrennungsmotor motorisch angetrieben sind, zeigen ein drehzahlabhängiges Verhalten. Auf der Hochdruckseite, das ist die Seite, auf der das durch die Öldruckpumpe geförderte Öl unter Druck von der Öldruckpumpe zur Verfügung gestellt wird, wird je nach Drehzahl des Verbrennungsmotors eine entsprechende Volumenstrommenge des Drucköls angeboten. Die Hochdruckseite mündet vorteilhafter Weise in eine Hochdruckverteilerleitung für mehrere unterschiedliche Hydraulikkreise. Mit anderen Worten bedeutet die Verwendung einer drehzahlgeführten Öldruckpumpe, wird ein Verbrennungsmotor mit sehr hohen Drehzahlen, also hochtourig, betrieben, liefert die Öldruckpumpe häufig zu viel Hydraulikmittel, also Hydrauliköl. In niedrigen Drehzahlbereichen muss das Öl aber trotzdem schon in einer ausreichenden Menge zur Verfügung stehen. Daher werden die Pumpen häufig im Ergebnis überdimensioniert ausgelegt. Die Öldruckpumpe folgt mit ihrem Förderverhalten der Drehzahl des Verbrennungsmotors. Bei hohen Drehzahlen fördert die Pumpe mehr als bei niedrigen Drehzahlen. Um mit dem Problem der inadäquaten Förderung zu Recht zu kommen, werden die Öldruckpumpen häufig mit einem Unter- oder Übersetzungsgetriebe ausgestattet; es bleibt aber bei der eingangs beschriebenen Situation, dass mit ansteigender Drehzahl des Verbrennungsmotors auch die Fördermenge der Öldruckpumpe ansteigt. Die Öldruckpumpe folgt mit einem synchronen Verhalten der Drehzahlentwicklung des Verbrennungsmotors. Die Öldruckpumpe läuft mit der Drehzahl des Verbrennungsmotors mit; ggf. ist ein Faktor aus dem Übersetzungsverhältnis in Bezug auf die exakte Drehzahl der Öldruckpumpe zu berücksichtigen.

Die Öldruckpumpe bezieht das Getriebeöl aus dem Sumpf des Getriebes. Die Öldruckpumpe saugt das Öl aus dem Sumpf an. Die Öldruckpumpe stellt also das angezogene Getriebeöl aus dem Sumpf des Getriebes dem Getriebe zur Verfügung. Hierbei ist nach einem weiteren Aspekt der vorliegenden Erfindung der Hydraulikleitungsführung so gestaltet, dass zumindest ein Teil des in den Leitungen vorhandenen Öls von der Öldruckpumpe im Kreis gefördert wird.

Von der Öldruckpumpe werden unterschiedliche Ölkreisläufe gespeist. Die Ölkreisläufe sind von einander möglichst weit entkoppelt. Man kann von entkoppelten Ölkreisläufen sprechen. Das bedeutet, die Ölkreisläufe beeinflussen sich nicht gegenseitig, solange die Druckölquelle, die Öldruckpumpe, ausreichend dimensioniert ist.

Nach einem Aspekt der vorliegenden Erfindung sind die Ölkreisläufe den einzelnen Hauptfunktionen des Doppelkupplungsgetriebes nachgebildet. Somit gibt es, wenn der Teilgetriebewechsel in den Mittelpunkt gerückt wird, einen Ölkreislauf, der einem einzelnen Teilgetriebe entspricht. Es gibt darüber hinaus nach einem weiteren Aspekt der vorliegenden Erfindung einen Ölkreislauf, der die Temperierung des Getriebeöls durchführt. Bei längerem Betrieb und bei höheren Leistungen ist vorrangig Wärme aus dem Getriebeöl auszubringen. Ein Ölkreislauf schickt das Öl über einen Drucköl-Wärmetauscher. Der Ölkreislauf für den Drucköl-Wärmetauscher ist nebengeordnet zu einem Ölkreislauf, der z. B. für die Aktuatorenversorgung zuständig ist. In den Aktuatorenölkreisläufen können z. B. Steuerungselemente der Schaltaktoren in einer eigenen Zirkulation sitzen. Es ist ein weiterer, eigenständiger Ölkreislauf vorgesehen, der nebengeordnet zu Aktuatorenölkreisläufen, wie einem Ölkreislauf für Steuerungselemente der Schaltaktuatoren, eine Zirkulation für einen Teil des Getriebeöls durch eine Kühlungseinrichtung mit einem Drucköl-Wärmetauscher schafft. Die Kühlungseinrichtung umfasst einen Drucköl-Wärmetauscher. Um Abrieb aus dem Drucköl-Wärmetauscher zurückzuhalten, ist vorteilhafter Weise ein Filter stromabwärts des Drucköl-Wärmetauschers in der Zirkulation angesiedelt. Weiterhin ist stromabwärts von der Kühlungseinrichtung eine Kupplungskühlstrecke vorhanden. Das Drucköl, das über den Wärmetauscher geführt ist, kann anschließend in die Kupplungskühlstrecke eingeleitet werden. Unter Verwendung von einem oder mehreren Ventilen lässt sich zudem die Druckölmenge oder der Anteil an dem Gesamtstrom des Drucköls über den Drucköl-Wärmetauscher einstellen. Zur Aufteilung des Drucköls sollte ein Abzweig in der Zirkulation angeordnet sein. Ein Teil des Drucköls kann so in die Kupplungskühlstrecke eingeleitet werden, ein Teil des Drucköls steht an anderen Stellen des Getriebes, z. B. für die Benetzung von Radsätzen, zur Verfügung. Die Kupplungskühlstrecke ist an einem der Abzweige der Zirkulation, die über den Drucköl-Wärmetauscher geführt ist, angeschlossen.

Mit der in den Ansprüchen beschriebenen Führung des Drucköls lässt sich gekühltes Drucköl in die Kupplungen einleiten. Der Temperaturunterschied zu den Kupplungen wird angehoben. Somit können in einer Ausgestaltung höhere Leistungen in dem Antriebsstrang durch die Kupplungen geführt werden. In einer weiteren Ausgestaltung lässt sich die Menge des Drucköls reduzieren. Je nach Auslegung des Drucköl-Wärmetauschers kann die Temperatur des Drucköls, das für die Kupplungskühlstrecke bestimmt ist, um mehr als 10 K abgesenkt werden. In einer Ausgestaltung wird das Drucköl um wenigstens 10 K mittels Drucköl-Wärmetauscher gekühlt. Weil Drucköl nicht nur für die Kupplungskühlstrecke, sondern für weitere Verbraucher, Aktuatoren oder Stellen im Getriebe stromabwärts von der Abzweigung zur Verfügung gestellt wird, werden die angeschlossenen Verbraucher oder Aktuatoren mit dem kühleren Drucköl, das stromabwärts des Drucköl-Wärmetauschers vorhanden ist, betrieben. Das gekühlte Drucköl steht mehreren Ölkreisläufen zur Verfügung. Mit dem gekühlten Drucköl können die Kupplungen durchspült werden.

Die Kühlung des Drucköls hat den zusätzlich positiven Einfluss, die Lebensdauer der vorhandenen Dichtungen in dem Getriebe zu erhöhen, weil sie aufgrund der herabgesenkten Temperatur langsamer altern.

Vorteilhafte Weiterbildungen, die eigenständige erfinderische Ideen beinhalten können, werden zusätzlich erörtert.

Es ist vorteilhaft, wenn mit Hilfe von speziell vorhandenen Ventilen Trennebenen gebildet werden. Die Trennebene lässt sich einfach durch Schaltventile aufbauen. Ein Schaltventil kann zwischen verschiedenen Schaltpositionen wechseln. In einer besonders einfachen Ausführung sind sogenannte Schwarz-Weiß-Ventile Schaltventile. Das Schaltventil kann dahingehend weitergebildet werden, dass es eine Vorzugsstellung hat, die eine von den durch das Ventil einnehmbaren Stellungen ist. Die Vorzugsstellung lässt sich z. B. durch eine Feder bestimmen. Liegt keine ausreichende Bestromung an dem Magneten des Ventils an, so drückt die Feder den Kolben des Ventils in eine Vorzugsstellung, in die Ruhestromstellung. Die Vorzugsstellung sollte die Stellung sein, bei der das Getriebe, insbesondere die Kupplung des Getriebes, in einen kontrollierten Zustand übergeht, wie z. B. in eine geöffnete Kupplungsstellung. Ein unkontrollierter Vortrieb ist so nicht mehr möglich.

Die Trennebenen bildenden Ventile, also die Ventile, die den Proportional-Regelventilen vorgeschaltet sind, sollten möglichst fehlerunanfällig gestaltet sein. Solche Ventile können entweder als 4/2-Ventile oder als 2/2-Ventile realisiert werden. Erfindungsgemäß ist das Ventil von dem Steuergerät ansteuerbar und mit einem elektrisch betätigbaren Steuerschieber ausgestattet.

Ventile mit mehreren Schaltstellungen, wie z. B. ein 4/2-Ventil oder ein 2/2-Ventil mit jeweils zwei Schaltstellungen, können beliebige Schaltstellungen aufweisen. Besonders vorteilhaft ist es, wenn eine erste Schaltstellung eine Abkoppelung der zentralen Druckversorgungsleitung von der Zuleitung zu dem nachgeschalteten Proportional-Regelventil sicherstellt. Eine hierzu zweite Schaltstellung sollte dann eine Durchschaltung des Drucks zulassen. Mit Hilfe des Sperrventils kann festgelegt werden, ob die Ansteuerung des Proportional-Regelventils überhaupt einen Einfluss auf die ihm zugeordnete Kupplung haben wird.

Das Schaltverhalten der entsprechenden (hydraulischen) Strecke zu der Kupplung kann mit Hilfe von zusätzlichen Leitungen verbessert, z. B. schneller gemacht, werden. In einer Ausgestaltung können Bypass-Leitungen parallel zu dem Proportional-Regelventil vorhanden sein, die als Umgehungsleitungen um das Proportional-Regelventil zwischen Trennventil und Kupplung vorhanden sind. Soll die Befüllung oder Entleerung schneller geschehen, so kann über die Bypass-Leitung noch zusätzliches Hydraulikmittel in den Betätigungszylinder der Kupplung geleitet oder aus diesem herausgeleitet werden. Die Schaltdynamik wird mit solchen Maßnahmen positiv beeinflusst. Die Entleerung kann dabei in den Tank oder den Sumpf erfolgen, sodass die Öldruckpumpe von dort wieder neu Hydraulikmittel ansaugen kann.

In hydraulischen Systemen treten immer wieder überlagerte Schwingungen auf. Die hydraulischen Schwingungen sollten wenigstens abfangbar sein, wenn schon nicht von Anfang an unterbindbar. In diesem Zusammenhang hilft es, wenn ein Zwischenspeicher vorgesehen ist. Der Zwischenspeicher kann z. B. als federvorgespannter Hohlraum gestaltet sein. Der Zwischenspeicher dient zum Abfangen von Druckschwingungen. Der Hohlraum kann als Dämpfungsglied betrachtet werden. Es handelt sich im Vergleich mit elektrischen Modellen um einen hydraulischen Tiefpass. Hochfrequente Schwingungen werden von dem Zwischenspeicher absorbiert. Die Kupplung bleibt stabiler in ihrer Schließstellung.

Zur Kontrolle des Hydraulikzylinders der Kupplung ist je ein Positionierungssensor vorgesehen. Der Positionierungssensor kann z. B. als Drucksensor mit einer Messaufnahme in einer der Druckölzuleitungen ausgebildet sein. Eine Verschiebung des Hydraulikzylinders hängt mit dem Druck in der Zuleitung linear zusammen.

Das Getriebe sollte eine Steuerungseinheit, ein Steuergerät, zur Erfassung und Bearbeitung von Signalen der Positionierungssensoren der Schaltaktuatoren der Schaltmuffen und der Positionierungssensoren der Hydraulikzylinder der Kupplungen haben. Die Steuerungseinheit sollte z. B. Vorgänge in dem Getriebe steuern, die Synchronisation der Vorgänge in Teilgetrieben, die Steuerung der Ventile, die Überwachung und Steuerung des Betriebsmodus und die Einleitung eines Notbetriebsmodus durchführen können. Die Steuerungseinheit kann Positionen der Schaltmuffen und Schaltzustände des Muffenwahlventils messen, erheben und ermitteln, damit so eine Überwachung durchführen.

In dem Getriebe ist eine Anzahl von Ventilen für verschiedene Steuerungsaufgaben vorhanden. Zur Steuerung eines Schmierölflusses ist ein Schmierölstromventil vorgesehen, das vorzugsweise in Form eines hydraulisch betätigten Ventils mit einer Sperrstellung und einer Durchflussstellung ausgebildet ist. Zur Steuerung eines Kühlölflusses zu wenigstens einer der Kupplungen ist ein Kühlölstromventil vorgesehen. Das Ventil kann in Form eines hydraulisch oder elektromagnetisch betätigten Ventils realisiert sein. Das Ventil sollte eine Sperrstellung und eine Durchflussstellung haben. Das Ventil sollte zumindest als Zweistellungs-Ventil ausgebildet sein. Weitere Stellungen fördern die Funktionsvielfalt. Ist das Ventil ein Proportional-Regelventil, so kann der Kühlölstromfluss eingestellt werden. Ist das Ventil ein elektromagnetisch einstellbares Ventil, so kann die Menge des Kühlöls mit Hilfe des elektrischen Stroms in den Magneten oder durch das Tastverhältnis bei der Magnetansteuerung eingestellt werden. Das Ventil kann in der Kupplungskühlstrecke angeordnet sein. Das Ventil lässt sich am Eingang der Kupplungskühlstrecke anordnen, so kann das Kühlölstromventil die Kühlölstromstrecke und die zu kühlenden Kupplungen oder die zu kühlende Kupplung bedarfsgerecht kühlen.

Weil eine beachtliche Leistung, z. B. die Verlustleistung, die bei einem Drehmoment von mehr als 400 Nm in der Kupplung in Wärme umzusetzen ist, über einige Doppelkupplungen zu führen ist, sollte eine ausreichende Kühlung auch in dem Fall, dass das Kühlölstromventil einen Fehler aufweisen sollte, gegeben sein. Hier hilft ein federvorgespanntes Proportional-Regelventil, das als Kühlölstromventil in der Durchflussstellung solange gehalten wird, wie eine Steuerkraft zur Einnahme der Sperrstellung durch einen Kolben des Kühlölstromventils geringer als eine Leerlauffederkraft ist. Die Kraft der Feder, die die Federvorspannung erzeugt, ist so groß, dass der Kolben des Ventils in der Durchlassstellung gehalten werden kann. Nur wenn eine ausreichende elektrische Bestromung stattgefunden hat, schaltet das Ventil in die Sperrstellung.

Durch die unmittelbare Kopplung des Proportional-Regelventils, das einer der Kupplungen zugeordnet ist, mit dem Betätigungszylinder oder durch die unmittelbare Kopplung des Proportional-Regelventils mit der Kupplung ist eine sehr kurze Strecke von einstellendem Proportional-Regelventil zu darauf reagierender Kupplung realisiert. Das Hydraulikmittel muss nicht erst noch weitere Bauteile durchströmen, um zur Kupplung zu gelangen. Die Leitungslängen können kurz gehalten werden. Das Ölvolumen wird somit ebenfalls gering gehalten. Zudem sind möglichst wenig zusätzliche Widerstände vorhanden. Ein Druckverlust aufgrund von zwischengeschalteten Ablassventilen geht nicht mehr nachteilig in die Versorgungsstrecke ein. Eine negative Beeinflussung der Füllvorgänge oder sogar der Kupplungsregelung ist reduziert.

Die dargestellte hydraulische Schaltung ermöglicht das direkte Anströmen einer hydraulisch zu betätigenden Kupplung eines automatisierbaren Schaltgetriebes mit Hilfe eines Druckregelventils. Zur Sicherstellung der Abschaltung des Drucks des Hydraulikmittels bei Fehlverhalten des Druckregelventils dient ein Druckabschaltventil. Das Druckabschaltventil, das als Sperrventil ausgestaltet werden kann, kann den Druck von der Druckversorgungsleitung zu dem Druckregelventil abschalten. In einer vorteilhaften Ausgestaltung kann zudem der Druck in der Kupplung zum Tank hin entlastet werden, z. B. durch die Verwendung eines 4/2-Wegeventils. Selbst bei einem Fehlverhalten des Druckregelventils ist kein ungewolltes Drehmoment über die Kupplung mehr zu übertragen.

Je nach Einstellung und Programmierung des Steuergeräts lassen sich beliebige Reihenfolgen für die Schaltvorgänge realisieren. So kann die Reihenfolge der Schaltvorgänge des Druckabschaltventils so gewählt werden, dass zuerst der Druck in der Kupplung entlastet wird, und anschließend die Druckversorgungsleitung in Verbindung mit der anderen Kupplung gesetzt wird. Alternativ kann die Druckzufuhr zum Druckregelventil unterbrochen werden und erst im Anschluss die Kupplung entlastet werden. Genauso kann natürlich auch gleichzeitig geschaltet werden. Eine bewusste Symmetrierung zusätzlicher Steuerschieber ist nicht mehr nötig. Es können beliebige Strömungsverhältnisse von und zu der jeweiligen Kupplung allein durch die Bohrungsbeeinflussung eines Ventils bestimmt werden. Ein schnelles Abströmen des unter Druck stehenden Hydraulikmittels aus der zugeordneten Kupplung ist möglich. Vorteilhaft kann zusätzlich mit den natürlich vorhandenen Leckagen bewusst operiert werden. Leckagen, z. B. durch die vorhandenen Drehdurchführungen zu den Kupplungen, können für eine automatische Entlastung der Kupplung eingeplant und somit genutzt werden. Die natürlichen Leckagen der Drehdurchführungen der Kupplungen fördern die hydraulische Entlastung der Kupplungen. Hierdurch kann die Abströmung zusätzlich beschleunigt werden.

Sollte in dem Getriebe ein Kühlölstromventil eingebaut sein, das hydraulisch betätigt wird, so kann zur hydraulischen Betätigung des Kühlölstromventils ein Kühlölführungsventil vorgesehen sein. Das Kühlölführungsventil übernimmt die Aufgabe eines Pilotventils für das Kühlölstromventil. Das Kühlölführungsventil arbeitet besonders zuverlässig, wenn das Kühlölführungsventil als rückgekoppeltes, elektrohydraulisches Proportional-Druckregelventil ausgebildet ist.

In dem Ölkreislauf, der unter anderem für die Druckölkühlung zuständig ist, er kann auch als Druckölaufbereitungskreislauf bezeichnet werden, können noch weitere Ventile vorhanden sein. Ein die Funktionssicherheit förderndes Ventil ist ein Hauptdruckregler. Der Hauptdruckregler dient zur Regulierung des gesamten Druckölflusses in dem Getriebe. Der Hauptdruckregler ist bestimmt durch den Druck, mit dem u. a. auf eine Kolbenseite des Druckölumlaufventils eingewirkt wird. Der Hauptdruckregler ist als vor dem Druckölumlaufventil vorgeschaltetes Ventil vorgesehen. Der Hauptdruckregler kann in einer Ausgestaltung in Form eines rückgekoppelten elektrohydraulischen Ventils ausgebildet sein. Der Hauptdruckregler sollte ein Proportional-Regelventil sein. Das Proportional-Regelventil des Hauptdruckreglers sollte wenigstens zwei Stellungen haben. An den Hauptdruckregler ist ein Anschluss zur Bestimmung einer Stellung eines weiteren Ventils genutzt. Das weitere Ventil ist in dem zuvor gebildeten Beispiel das Druckölumlaufventil, das an dem Hauptdruckregler stromabwärts für die Einstellung seines Kolbens angebunden ist. Über den Hauptdruckregler kann die Schaltstellung des Druckölumlaufventils eingestellt werden, das ebenfalls ein Proportional-Regelventil sein kann.

Das Druckölumlaufventil hat verschiedene Stellungen. Das Druckölumlaufventil dient unter anderem zur Stabilisierung des gesamten Druckölflusses in dem Getriebe. Das Druckölumlaufventil sollte wenigstens ein Drei-Stellungsventil sein. Das Druckölumlaufventil sollte eine erste Stellung haben, in der eine Zuleitung zu dem Drucköl-Wärmetauscher unterbrochen ist. Das Druckölumlaufventil sollte eine zweite Stellung haben, in der das unter Druck stehende Drucköl zu dem Drucköl-Wärmetauscher gelangt. Das Druckölumlaufventil sollte eine dritte Stellung haben, in der ein Teil des geförderten Drucköls zu einer Ansaugseite der Öldruckpumpe gelangen kann. In der dritten Stellung sollte ein weiterer Ölpfad geöffnet werden. Während ein Teil des von der Öldruckpumpe geförderten Drucköls wieder zur Ansaugleitung der Öldruckpumpe gelangt, wird für einen weiteren Teil des Drucköls eine Verbindung von der Öldruckpumpe zu dem Drucköl-Wärmetauscher hergestellt. In einer solchen Gestaltung sollte das Druckölumlaufventil in Form eines hydraulisch durch den Hauptdruckregler und eine Pumpenableitung betätigten Ventils ausgebildet sein. Das Druckölumlaufventil ist zweiseitig hydraulisch eingespannt. Das Druckölumlaufventil lässt sich mit Hilfe eines Druckunterschieds auf zwei Seiten des Kolbens des Druckölumlaufventils einstellen. Eine Seite des Druckölumlaufventils ist an den Hauptdruckregler angeschlossen. Eine Seite ist an die Pumpenableitung angebunden. Die Pumpenableitung ist die Leitung, in die das unter Druck stehende Drucköl, von der Öldruckpumpe unter Druck gesetzt, an weitere Verbraucher weitergeleitet wird.

In dem Getriebe sollte ein Ventil vorhanden sein, das die Aufgabe eines Schmierölstromventils übernehmen kann. Das Schmierölstromventil und das Kühlölstromventil sind strömungsmäßig dem Drucköl-Umlaufventil nachgeschaltet. Das Drucköl, das durch das Druckölumlaufventil von der Öldruckpumpe weitergeleitet wird, strömt durch das Schmierölstromventil und das Kühlölstromventil, sofern die beiden Ventile Schmierölstromventil und Kühlölstromventil in Durchlassstellung geschaltet sind.

Das Getriebe hat in einem hydraulischen Pfad das Schmierölstromventil, das Kühlölstromventil und das Druckölumlaufventil. Das Druckölumlaufventil bestimmt, welcher Anteil des Drucköls von der Druckölpumpe in den Kühlkreislauf geleitet wird. Das Druckölumlaufventil bestimmt, ob das gesamte Öl durch die Kühlungseinrichtung, die den Drucköl-Wärmetauscher umfasst, geleitet wird. Die Zirkulation, in der die Kühlungseinrichtung angeordnet ist, kann mit Hilfe des Druckölumlaufventils in einer Stellung von der Druckölpumpe abgeschlossen werden. Der Fluss des Drucköls ist in einer Stellung abgeschnitten von der Druckölpumpe. In diesem Fall steht das Drucköl für die übrigen Aktuatoren vollständig zur Verfügung. In Fällen, in denen entweder das Drucköl nicht gekühlt werden muss, z. B. bei tiefen Betriebstemperaturen, oder bei denen ein Fehlerfall in der Druckölversorgung der Hydraulik der Doppelkupplungseinrichtung gegeben ist, z. B. bei einem verstopften Filter, wird ein Notbetrieb der Aktuatoren, wie den Schaltaktuatoren und den Hydraulikzylindern, sichergestellt.

In dem Getriebe ist in vorteilhafter Weise zudem ein Kühlölumlaufventil vorhanden. Das Kühlölumlaufventil hat eine Sperrstellung und eine geöffnete Stellung. Zur Umleitung des Kühlölflusses zu einer Ansaugseite der Öldruckpumpe wird bei einem vorhandenen Druckunterschied über das Kühlölstromventil das Kühlölumlaufventil geschaltet. Hierbei sollte das Kühlölumlaufventil in Form eines hydraulisch betätigten Ventils mit einer Sperrstellung und einer Durchflussstellung ausgebildet sein. Ein hydraulisch betätigtes Kühlölumlaufventil kann durch Vergleich eines Öldrucks eingestellt werden. Der Öldruck an einer Zustromseite zu dem Kühlölumlaufventil und der Öldruck in der Kupplungskühlstrecke beeinflusst eine Ventilstellung des Kühlölumlaufventils.

Das zuvor beschriebene Getriebe kann mittels einer Ölflusssteuerung mit unterschiedlich stark gekühltem Drucköl betrieben werden. Durch die Stellungswahl verschiedener Ventile lässt sich nicht nur der Ölfluss einstellen, auch das Schaltverhalten durch die Muffenwahlventile entspricht Sicherheitsanforderungen. Das Schalten erfolgt so, dass unerwünschte doppelte Gangeinlegungen durch die Ölverteilung der Hydraulik bzw. die eingestellten und sich selbst einstellenden Druckölpfade der Hydraulik möglichst gut vermieden werden können. Hierbei werden mittels einer Ölflusssteuerung die Hydraulikzuleitungen zu einem Schaltaktuator aufgeschlossen. Unter Nutzung eines Muffenwahlventils, wie z. B. in der DE 10 2010 036 545.9 ausführlicher erklärt, kann ein extrem synchroner Vorgang ablaufen. Eine gleichzeitige Aufschließung von Hydraulikzuleitungen zu den Hälften eines zweiseitig hydraulisch ansteuerbaren Schaltaktuators erfolgt, während eine Entlastung eines zweiten Schaltaktuators erfolgt. Beide Schaltaktuatoren gehören dem gleichen Teilgetriebe an. Die Entlastung erfolgt gegenüber einem Gangschaltventil. Das Gangschaltventil ist dem Muffenwahlventil vorgeschaltet.

Das Kühlölumlaufventil bildet mit dem Kühlölstromventil eine sich gegenseitig beeinflussende Ventileinheit, durch die zum Beispiel im Fall eines Staudrucks in der Leitung der Kupplungskühlstrecke der Staudruck in Richtung auf die Rückleitung zur Öldruckpumpe abgebaut werden kann. Der Staudruck kann vielerlei Ursachen haben, z. B. aufgrund thermischer Gegebenheiten entweder des Öls (zu hohe Viskosität) oder von Verschmutzungen eines Filters (zu geringer Durchfluss) entstehen. Bei einem zu hohen Staudruck, z. B. wenn noch nicht die Betriebstemperatur erreicht worden ist, wird die Kupplungskühlstrecke abgekoppelt.

Erst wenn die Schaltaktuatoren ausreichend mit Drucköl versorgt sind, wird die Beölung der Radsätze und der Lager aufgenommen. Das Schmierölstromventil wird durch das Druckölumlaufventil versorgt. Der Hauptdruckregler verstellt das Druckölumlaufventil und gibt über den eingestellten Druck im Vergleich zu dem durch die Öldruckpumpe erzeugten Druck die an das Druckölumlaufventil angeschlossenen Ölkreisläufe bzw. Zirkulationen und Verbraucher frei. Durch einen Puffer oder Speicher können von der Öldruckpumpe verursachte kurzzeitige Schwankungen, wie z. B. Pulse, ausgeregelt werden. Je nach Größe der eingesetzten Speicher dient ein solcher Speicher zur Vermeidung von Schwingungen bei der Ansteuerung. Das Hydraulikmittel wird von der Druckversorgung für die Betätigung der Schaltaktuatoren zur Verfügung gestellt.

Die hydraulische Steuerung umfasst mehrere Stränge. Jede einzelne Kupplung befindet sich in einem für sie vorgesehenen Strang, der nur die Versorgung bzw. das Betätigen der Kupplung übernimmt. Darüberhinaus ist es vorteilhaft, wenn ein Druckabschaltventil vorgesehen ist. Das Druckabschaltventil kann einen Strang abschalten.

In einem besonders günstigen Fall ist ein Aktuator in einem Strang vorgehalten. Das bedeutet, übertragen auf die Kupplungen, dass eine Kupplung in einem ersten Strang angeordnet ist. Eine zweite Kupplung ist in einem zweiten Strang angeordnet. Der Strang für die erste Kupplung hat nichts mit dem Strang für die zweite Kupplung ab dem Druckabschaltventil zu tun. Die Kupplungen sind gegeneinander entkoppelt. Das Druckabschaltventil unterdrückt Einflüsse der einen Kupplung auf die andere Kupplung. Der Strang für die erste Kupplung stellt die Versorgung der Kupplung bzw. des hydraulischen Betätigungszylinders der Kupplung sicher. Der Strang für die zweite Kupplung stellt die Versorgung der zweiten Kupplung bzw. des hydraulischen Betätigungszylinders der zweiten Kupplung sicher. Die Stränge zu den Kupplungen sind ohne weitere Verbraucher bzw. Schaltaktuatoren aufgebaut. Ein Strang zu einer Kupplung ist befreit von weiteren Aktuatoren realisiert.

Ein Strang umfasst in einer Gestaltung ein den Strang absperrendes erstes Ventil. Weiterhin umfasst ein Strang ein zweites Ventil. Das zweite Ventil kann zur Druckregelung in dem Strang genutzt werden. Optional kann ein Strang einen Puffer, Filter und Messsensorik umfassen. Der Strang mündet in die Kupplung bzw. den Betätigungszylinder einer Kupplung.

Jede Kupplung ist Teil eines hydraulischen Strangs, der nur für die jeweilige Kupplung vorhanden ist. Damit die Kupplung, z. B. im Rahmen von Überblendfunktionen, betrieben werden kann, sind Ventile und sonstige hydraulische Hilfsmittel vorzusehen.

Der Aktuator ist entkoppelt von dem anderen hydraulischen Strang abschaltbar. Das hat den Vorteil, dass z. B. Leckagen, die in den Drehdurchführungen auftreten können, individuell abfangbar sind, indem bei zu großen Leckagen z. B. nur der Strang einer Kupplung abgesperrt wird, ohne weitere Aktuatoren in anderen Strängen zwangsweise von der zentralen Versorgungsleitung abzukoppeln.

Das erfindungsgemäße Getriebe zeichnet sich durch die Ventilkonstruktionen, ein vorteilhaftes hydraulisches Schema und ein Verfahren zur Steuerung aus, bei der das Funktionieren des Getriebes, insbesondere eine betriebsgerechte Druckmittelbeeinflussung, Schmierung, Kühlung und Gangschaltung auch in zahlreichen Notbetriebssituationen, gewährleistet ist. Selbst in einem erweiterten Temperaturbereich bleibt die hydraulische Steuerung des Getriebes notbetriebsfähig. Eine zuverlässige Funktion wird selbst in einem großen Temperaturbereich sichergestellt. Im Fall eines Komponentenausfalls bleiben die übrigen Teile des Getriebes betriebsbereit.

### Figurenkurzbeschreibung

Die vorliegende Erfindung kann noch besser verstanden werden, wenn Bezug auf die beiliegenden Figuren genommen wird, die eigenständige erfinderische Aspekte zusätzlich offenbaren können, wobei
Figur 1 einen ersten, vereinfachten Schaltplan einer erfindungsgemäßen hydraulischen Steuerung zeigt,
Figur 2 eine zweite Ausführungsvariante einer erfindungsgemäßen hydraulischen Steuerung zeigt,
Figur 3 ein Doppelkupplungsgetriebe in Prinzipdarstellung in einem Kraftfahrzeug zeigt und
Figur 4 in einem größeren Zusammenhang einen Hydraulikschaltplan eines Kraftfahrzeuggetriebes zeigt.

### Figurenbeschreibung

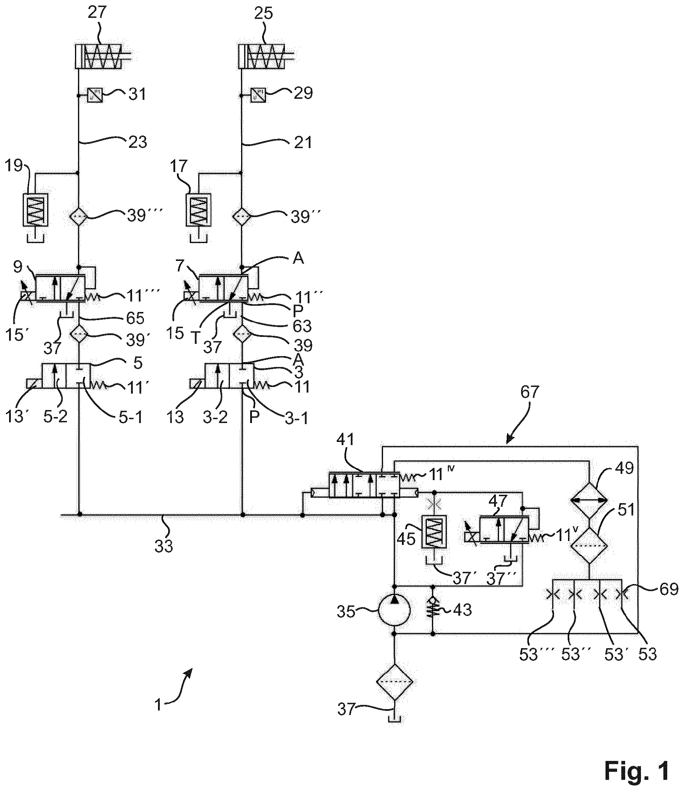

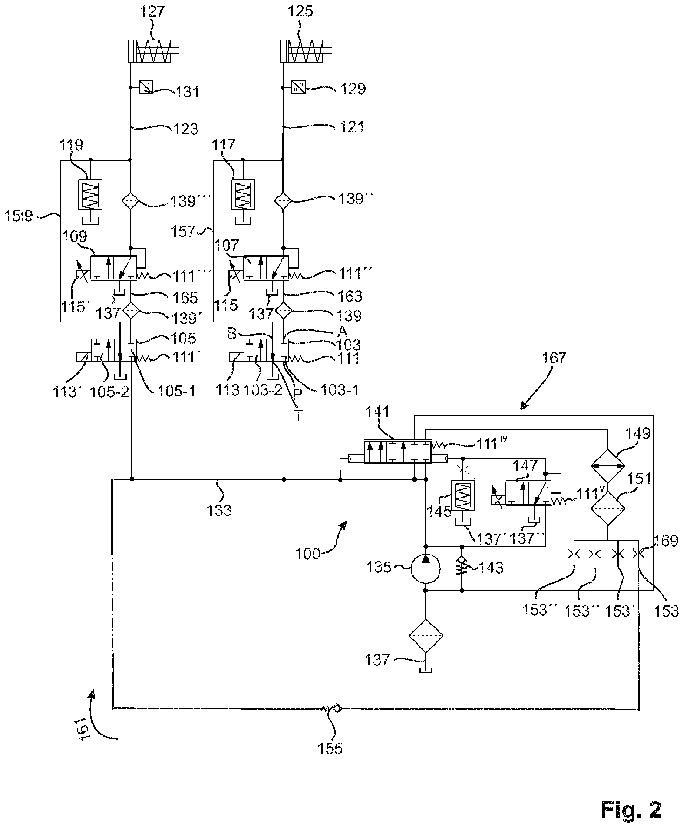

Einen Auszug aus einer Doppelkupplungsgetriebehydraulik vermitteln die Figuren 1 und 2. Figur 2 stellt eine ähnliche Hydrauliksteuerung 100 dar, wie sie in Figur 1 als Hydrauliksteuerung 1 nachfolgend erörtert werden soll.

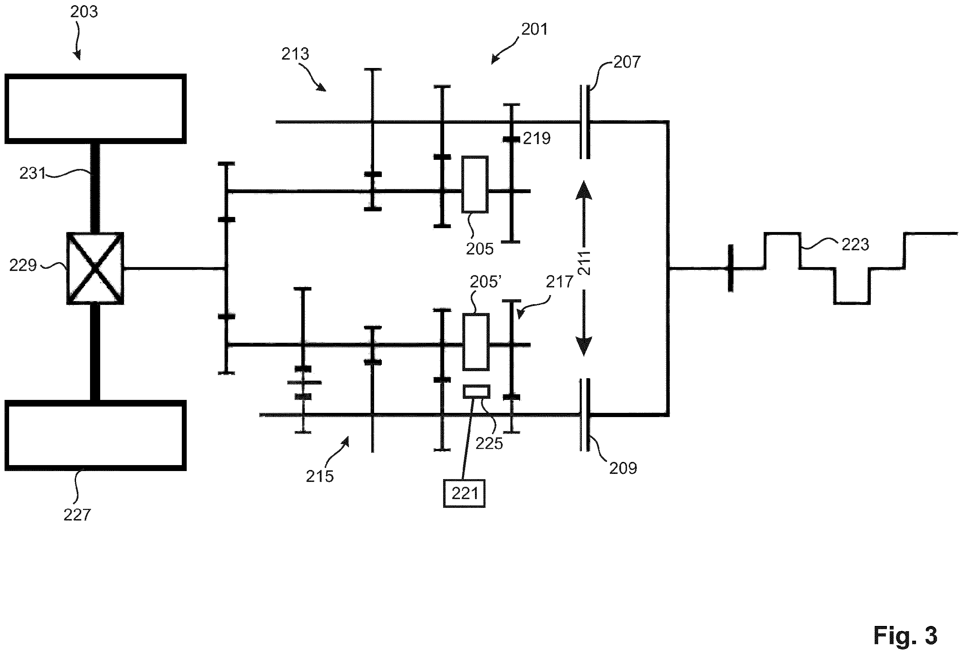

Figur 1 zeigt eine hydraulische Steuerung 1, die sich aus verschiedenen Komponenten, wie dem Druckölaufbereitungskreislauf 67 und den Steuerungen für Kupplungen 25, 27, zusammensetzt. Als zentrale Leitung der hydraulischen Steuerung kann die Druckversorgungsleitung 33 betrachtet werden. Die zentral angeordnete Druckversorgungsleitung 33 liefert das Hydraulikmittel an weitergehende Leitungen, die zum Beispiel stichleitungsartig die hydraulische Versorgung der Kupplungen 25, 27 sicherstellen. Die Zuleitung zu den einzelnen Verbrauchern wie der Kupplung 25, 27 lässt sich durch Ventile 3, 5 abkoppeln, zum Beispiel stillsetzen. Hierfür weist das Ventil 3 einen ersten Zustand 3-1 und einen zweiten Zustand 3-2 auf, von denen ein Vorzugszustand 3-1 durch die Federkraft der Feder 11 so lange eingenommen ist, wie der Magnet 13 keine ausreichende Gegenkraft auf den Kolben des Ventils 3 ausüben kann. Die Versorgung aus der Druckversorgungsleitung 33 erfolgt an dem Anschluss P des Ventils 3, das eine Abströmseite an seinem Arbeitsanschluss A hat. Ähnlich ist das nachgeschaltete Proportional-Regelventil 7, das neben seinem Druckanschluss P einen Arbeitsanschluss A und einen Tankanschluss T hat. Mit Hilfe des als Sperrventil arbeitenden Ventils 3 kann die hydraulische Versorgung des Proportional-Regelventils 7 unterbunden werden. Ähnlich lassen sich die beiden Zustände 5-1 und 5-2 des Ventils 5 einstellen, um eine hydraulische Versorgung für das zweite Proportional-Regelventil 9 sicherzustellen. Das Sperrventil 5 ist ein mit der Feder 11^{I} ausgestattetes Ventil 5, bei dem die Feder 11^{I} dem Magneten 13^{I} entgegenwirkt. Die Magneten 13 des Ventils 3 und 13^{I} sind vorteilhafter Weise identisch gewickelt und identisch ausgelegt. Damit die Proportional-Regelventile 7, 9 möglichst fehlerfrei arbeiten, sind Filter 39, 39^{I}, 39^{II}, 39^{III} auf der Zu- und Abströmseite der Ventile 7, 9 angeordnet, um Schmutzpartikel aus den Zuleitungen wie der Zuleitung 63, 65 und der Kupplungszuleitung 21, 23 von den Proportional-Regelventilen 7, 9 fernzuhalten. Bis auf den Filter 39^{II}, 39^{III}, der abströmseitig des Steuerventils 7, 9 angeordnet ist, sind keine den Durchfluss zu der Kupplung 25, 27 beeinflussenden Bauteile in der Kupplungszuleitung 21, 23 vorhanden. Zur Stabilisierung der Regelung können kleine Zwischenspeicher 17, 19 stichleitungsartig an den Kupplungszuleitungen 21, 23 vorhanden sein, die Druckimpulse in dämpfender Weise aufnehmen. Dadurch, dass die Federvorspannung der Kupplungsbetätigungszylinder 25, 27 bekannt ist, kann mit Hilfe von Positionierungssensoren 29, 31, die zum Beispiel Drucksensoren sein können, der Schließgrad der jeweiligen Kupplung 25, 27 für das Steuergerät 221 (siehe Figur 3) ermittelt werden. Wenn die Kupplung 25 oder 27 geöffnet werden soll, geht das Steuerventil 7 oder 9 in einen solchen Zustand, dass das Hydraulikmittel in der Kupplungszuleitung 21 oder 23 Richtung Ölsumpf 37 durch das Ventil 7 oder 9 abgeleitet werden kann. Vorteilhafter Weise ist das Proportional-Regelventil 7, 9 ein federvorgespanntes Ventil mit einem elektrisch einstellbaren Magneten 15, 15^{I}. Die Feder 11^{II}, 11^{III} arbeitet entgegen der magnetischen Kraft des Magneten 15, 15^{I}. Die Druckversorgungsleitung 33 erhält das Hydraulikmittel von der Öldruckpumpe 35, die das Hydraulikmittel aus dem Ölsumpf 37 ansaugen kann. Sollte sich über die Öldruckpumpe 35 ein zu hoher Druck aufbauen, so reagiert das Überdrucksicherheitsventil 43, das das geförderte Hydraulikmittel in druckregelnder Weise Richtung Sumpf 37 kurzschließen kann. Das Hydraulikmittel kann zum einen in die Druckversorgungsleitung 33 gelangen, wenn es durch die Öldruckpumpe 35 gefördert worden ist, und zum anderen in den Druckölaufbereitungskreislauf 67, sofern das Druckölumlaufventil 41 in einer solchen Stellung steht, dass das Hydraulikmittel zum Beispiel zu dem Drucköl-Wärmetauscher 49 durchströmen kann. Das Druckölumlaufventil 41 ist vorteilhafter Weise ebenfalls ein Ventil, das mit einer Feder 11^{IV} ausgestattet ist, sodass bei nicht ausreichender Hydraulikmittelversorgung die hydraulische Versorgung der Druckversorgungsleitung 33 sichergestellt ist, aber möglichst wenig oder gar kein Hydraulikmittel in den Druckölaufbereitungskreislauf 67 entschwindet. Die Position des Druckölumlaufventils 41 wird mit Hilfe eines Hauptdruckreglers 47 eingestellt, der ebenfalls aus Sicherheitsüberlegungen eine Feder 11^{V} hat. Sollte der Druckregler 47 nicht einwandfrei arbeiten, so drückt die Feder 11^{IV} den Kolben des Druckölumlaufventils 41 in die zum Druckölaufbereitungskreislauf abgekoppelte Stellung, weil die Feder 11^{V} den Hauptdruckregler 47 in eine gegenüber einem Tank 37" offene Stellung drückt. Pumpenpulsationen der Öldruckpumpe 35, die durch den Hauptdruckregler 47 auf das Druckölumlaufventil 41 gelangen würden, werden durch den Speicher 45 aufgenommen, abgefangen und dadurch wird das Druckölumlaufventil stabilisiert. Übermengen des Hydraulikmittels können zudem aus dem Speicher 45 gegenüber einem Tank 37' abgelassen werden. Ist die Druckversorgungsleitung 33 ausreichend mit Hydraulikmittel versorgt, sodass die Kupplungen 25, 27 unbeschadet betätigt werden könnten, gibt das Druckölumlaufventil 41 den Druckölaufbereitungskreislauf 67 frei, sodass über den Drucköl-Wärmetauscher 49 durch den Druckölfilter 51 gefiltertes Hydraulikmittel in weiterführende Ölkreisläufe 53, 53^{I}, 53^{II}, 53^{III} gelangen kann. Die Ölverteilung in den Ölkreisläufen 53, 53^{I}, 53^{II}, 53^{III} wird mit Hilfe von Durchflusssteuerungen 69, die zum Beispiel Drosselquerschnitte in den Leitungen sein können, bestimmt, sodass trotz geöffnetem Druckölumlaufventil 41 die wichtigsten Komponenten der hydraulischen Steuerung 1, wie zum Beispiel die Kupplungen 25, 27 weiterhin ausreichend mit Hydraulikmittel versorgt werden können.

Die Proportional-Regelventile 7, 9 können aufgrund ihrer Magneten 15, 15^{I} beliebige Zwischenstellungen zwischen den beiden graphisch dargestellten Zuständen einnehmen, sodass der Druck auf die Kupplungen 25, 27 beliebig einstellbar ist, damit zum Beispiel beide Kupplungen 25, 27 in einer Schlupfstellung sind und ein unterbrechungsfreier Kraftflusswechsel von einer Kupplung 25 auf die andere Kupplung 27 möglich ist. Meldet einer der Positionierungssensoren 29, 31 einen unerwarteten Zustand in den Kupplungszuleitungen 21, 23, so kann das Steuergerät 221 (siehe Figur 3) die entsprechende Stichleitung zu der Kupplung 25, 27 mit Hilfe der Sperrventile 3, 5 abschalten und einen Kraftfluss über das andere Teilgetriebe zulassen. Der am Anschluss P des Ventils 7 anstehende Druck, der aus der Druckversorgungsleitung 33 bezogen werden kann, erfährt nur über das Ventil 7 einen Druckabfall, ggf. bei verschmutztem Filter 39" ebenfalls dort einen gewissen Druckabfall, wird aber im Übrigen unmittelbar auf kurzem Wege der Kupplung 25 zur Verfügung gestellt. Wird nur eine geringe Verschmutzung des Hydraulikmittels durch die Kupplungen 25, 27 erwartet, so können die Filter 39", 39^{III} entfallen und der Druck am Anschluss A des Ventils 7 bzw. eines vergleichbaren Anschlusses an dem Ventil 9 gelangt unmittelbar zu den Kupplungen 25, 27. Die Steuerung durch die Ventile 7, 9 ist deutlich feinfühliger und feingliedriger als Steuerungen über Kupplungszuleitungen 21, 23, die über zusätzliche Ventile geführt sind.

Figur 2 zeigt eine ähnliche hydraulische Steuerung 100 wie zuvor besprochen. Aus der hydraulischen Steuerung 100 sind auszugsweise wichtige Komponenten, wie die Betätigungszylinder 125, 127 der Kupplungen, dargestellt. Es versteht sich von selbst, dass hydraulische Steuerungen, wie die hydraulische Steuerung 100 der Figur 2, mit weiteren Leitungen, Ventilen und Verbrauchern ausgestattet sind, wenn ein Doppelkupplungsgetriebe 213 (siehe Figur 3) von einer hydraulischen Steuerung zu betätigen ist und nicht nur das Doppelkupplungspaket 211 (siehe Figur 3). Die hydraulische Steuerung 100 nach Figur 2 bezieht das Hydraulikmittel in der Druckversorgungsleitung 133 standardmäßig aus der Öldruckpumpe 135, die hierfür Hydraulikmittel aus dem Ölsumpf 137 ansaugt. Sollte sich ein zu hoher Druck durch die Öldruckpumpe 135 aufbauen, spricht das Druckregelventil 143 an und die Öldruckpumpe 135 fördert das Hydraulikmittel nur noch über sich selbst, bis der Druck in der Druckversorgungsleitung 133 wieder in ein akzeptables Druckband gelangt ist. Sobald ein ausreichender Druck in der Druckversorgungsleitung 133 aufgebaut ist, kann das Druckölumlaufventil 141, das aufgrund seiner Feder 111^{IV} zu Beginn des Betriebs in einer Sperrstellung gehalten wird, den Druckölaufbereitungskreislauf 167 aktivieren. Der Druckölaufbereitungskreislauf 167 ist mit Druckölfiltern 151 und wenigstens einem Drucköl-Wärmetauscher 149 ausgestattet, sodass über die Ölkreisläufe 153, 153^{I}, 153^{II}, 153^{III} Hydraulikmittel an nachgeschaltete Verbraucher gelangen kann, zum Beispiel für die Beölung von Getriebezahnrädern 219 (siehe Figur 3). Eine der Leitungen der Ölkreisläufe 153, 153^{I}, 153", 153^{III} ist über ein Ventil 155, mit dem eine Durchflusssteuerung eingestellt werden kann, als Zirkulation 161 für die Druckversorgungsleitung 133 ausgestaltet. Die Regelung des Druckölumlaufventils 141 erfolgt aus einem Zusammenspiel des Drucks der Öldruckpumpe 135, des Hauptdruckreglers 147, und den Druckverhältnissen an dem Druckölumlaufventil 141, die durch den Speicher 145 stabilisiert sind. Mit Hilfe der Federn 111^{IV}, 111^{V} werden die Ventile 141, 143 jeweils in eine solche Vorzugsstellung gebracht, dass Hydraulikmittel in die Tanks 137^{I}, 137^{II} entweichen kann, wenn das Druckölumlaufventil 141 noch nicht den Druckölaufbereitungskreislauf 167 versorgen soll. Die Menge des gekühlten Hydraulikmittels durch den Drucköl-Wärmetauscher 147 lässt sich mit Hilfe von Durchflusssteuerungen 169 einstellen. Ein Entweichen des Drucks aus der Druckversorgungsleitung 133 wird mit Hilfe des Ventils 155 unterbunden, wenn in dem Druckölaufbereitungskreislauf 167 ein zu geringer Öldruck vorhanden sein sollte. Aufgrund von natürlicher Leckage über die Drehdurchführungen der Kupplungen, die durch die Betätigungszylinder 125, 127 geöffnet und geschlossen werden, sackt im Laufe der Zeit der Druck in der Druckversorgungsleitung 133 ab. Zu jedem Betätigungszylinder 125, 127 sind zwei Ventile 103, 107 und 105, 109 seriell hintereinandergeschaltet. Der P-Port des Ventils 103 ist an der Druckversorgungsleitung 133 angeschlossen. Der erste Arbeitsanschluss A des Ventils 103 wird über die Zuleitung 163 auf die Druckversorgungsseite des Ventils 107 geführt. Sowohl das Ventil 107 als auch das Ventil 103 mit seinem Anschluss T haben einen Anschluss zum Ölsumpf 137. Steht das Ventil 103 im ersten Zustand 103-1, dies zum Beispiel verursacht durch die Feder 111, und steht das Ventil 107 in einem vergleichbaren ersten Zustand, dies zum Beispiel verursacht durch die Feder 111^{II}, so kann das gesamte Hydraulikmittel in der Kupplungszuleitung 121 und in der Bypass-Leitung 157 innerhalb von wenigen Millisekunden zum Ölsumpf 137, zum Beispiel durch den Anschluss T, entweichen. In der Bypass-Leitung 157 ist ein Zwischenspeicher 117, der ausreichend für einige, wenige Schaltwechsel, zum Beispiel drei bis vier Schaltwechsel des Betätigungszylinders 125, dimensioniert ist, sollte das Ventil 103 in einer unkontrollierten Stellung zwischen dem ersten Zustand 103-1, 103-2 verharren. Fehler der Magneten 113, 115 werden jedoch standardmäßig durch die Federn 111, 111^{II} abgefangen. Die Bypass-Leitung 157 ist auf den zweiten Arbeitsanschluss B des Ventils 103 geführt, sodass eine Entlastung der Bypass-Leitung 157 gegenüber Tank 137 möglich ist. In einer besonders einfachen Ausgestaltung sind die Tanks 137, 137', 137" als ein einziger Ölsumpf zusammengeführt. Zur Verhinderung von klemmenden Stößeln oder zur Vermeidung von schlecht regelnden Proportional-Regelventilen 107, 109 sind in den Zuleitungen 163, 165, 121, 123 Filter 139, 139^{I}, 139", 139^{III} eingebaut.

Soll der Betätigungszylinder 127 betätigt werden, wird über den Magneten 113^{I} das Ventil 105 aus dessen ersten Zustand 105-1 in den zweiten Zustand 105-2 verbracht, um - je nachdem welches Steuerkonzept das Steuergerät 221 (siehe Figur 3) befolgt - anschließend oder gleichzeitig den Magneten 115^{I} so anzusteuern, dass ein mit dem Positionierungssensor 131 überprüfbarer Druck in den Betätigungszylinder 127 gelangt. In parallel überwachender Weise misst das Steuergerät 221 den Positionierungssensor 129, mit dem sichergestellt werden kann, dass der Betätigungszylinder 125 in der gewünschten Stellung vorhanden ist. Soll eine gewisse Menge Hydraulikmittel aus dem Betätigungszylinder 127 abgeführt werden, kann durch ein Ausschalten des Magneten 115^{I} und unter Nutzung der Federkraft der Feder 111^{III} eine Verbindung von der Kupplungszuleitung 123 zu dem Tank 137 hergestellt werden. Das Hydraulikmittel in der Bypass-Leitung 157 erfährt eine zusätzliche Pufferung durch den Zwischenspeicher 119. Soll der Zwischenspeicher 119 ebenfalls entleert werden, so kann die Federkraft der Feder 111^{I} genutzt werden, damit das Ventil 105 in den Zustand 105-1 gelangt und eine Entlastung der Bypass-Leitung 159 gegenüber Tank 137 erfolgt. Die zentrale Druckversorgungsleitung 133 ist mehrfach gegenüber Verbrauchern wie den Betätigungszylindern 125, 127 oder den Schmierölkreisläufen 153^{II}, 153^{III} durch Ventile 103, 105, 155 abgesperrt. Der Zustand, den so ein Ventil, wie das Ventil 105, standardmäßig einnimmt, ist der erste Zustand 105-1, der für eine Druckaufrechterhaltung in der Druckversorgungsleitung 133 sorgt. Nur bei aktiver Ansteuerung aus dem Steuergerät 221, zum Beispiel über den Magneten 113^{I}, gelangt das Ventil 105 in den zweiten Zustand 105-2. Während im ersten Zustand 105-1 der Zwischenspeicher 119 sein Hydraulikmittel ebenfalls abgeben kann, bleibt das Hydraulikmittel in dem Zwischenspeicher 119 im zweiten Zustand 105-2 erhalten.

Die Kupplungen und die Kupplungszylinder 125, 127 können mit gekühltem Hydraulikmittel aus der Druckversorgungsleitung 133 versorgt werden. Durch die Zirkulation 161 gelangt gekühltes Hydraulikmittel in die Druckversorgungsleitung. Ein Teil des Hydraulikmittels wird im regulären Betrieb über den Drucköl-Wärmetauscher 149 geführt.

Es versteht sich von selbst, dass die beiden beispielhaft dargestellten Ausführungsbeispiele der Figuren 1 und 2 miteinander vermischt werden können. So kann zum Beispiel eines der Ventile 103, 105 durch ein Ventil wie das Ventil 3, 5 ersetzt werden, während das andere Ventil als 4/2-Ventil weiterhin in der hydraulischen Steuerung 100 vorhanden ist. Durch eine solche Maßnahme kann die Entleerung einer der beiden Kupplungszuleitungen schneller von Statten gehen als die Entleerung der anderen Kupplungszuleitung, was die Förderung weiterer Sicherheitsaspekte darstellt.

Wie in Figur 2 als vorteilhafte Ventilintegration zu sehen ist, sind das Druckölumlaufventil 141, das Kühlölstromventil und das Schmierölstromventil zu einer einzigen Ventilbaugruppe zusammengefasst, die in einem Ventil vereint, je nach Stellung des Ventilkolbens des Druckölumlaufventils 141, die unterschiedlichsten Leitungen, Verbindungen und Wege 153, 153', 153", 153^{III}, 161 freigibt.

Figur 3 zeigt in schematischer Darstellung einen kompletten Radsatz, der mehrere einzelne Radsätze 217 umfasst, eines Doppelkupplungsgetriebes 213 in einem Kraftfahrzeug, das durch den Antriebsstrang 201 bis zu der Radachse 203 symbolisiert ist. Die Gangwahl in dem Doppelkupplungsgetriebe 213 erfolgt über Schaltmuffen bzw. Schiebemuffen 205, 205^{I}, über die wahlweise ein Gang, der der ersten Kupplung 207 oder der zweiten Kupplung 209 zugeordnet ist, einzulegen ist. Aufgrund der beiden Kupplungen 207, 209 handelt es sich um eine Doppelkupplungseinrichtung mit einem Doppelkupplungspaket 211. Das Doppelkupplungspaket 211 bestimmt den Kraftfluss über eines der zwei Teilgetriebe, wie dem Teilgetriebe 215. Das Getriebe 211 wird von der Kurbelwelle der Verbrennungskraftmaschine 223, dessen Rest in bekannter Weise aufgebaut ist und daher nicht vollständig dargestellt ist, angetrieben, damit über die Halbachsen 231, die über das Differential 229 verbunden sind, Antriebsleistung auf die Straßenräder 227 weitergeleitet werden kann. Die Schaltmuffen 205, 205^{I} können zur Gangwahl ein- und ausgelegt werden. Hierfür hat die Steuerungseinheit bzw. das Steuergerät 221 auf der einen Seite Positionierungssensoren 225, 29, 31, 129, 131 (siehe auch Figuren 1 und 2), mit denen die Position der Aktuatoren wie Schaltmuffen 205, 205^{I} und Betätigungszylinder 25, 27, 125, 127 (siehe Figuren 1 und 2) ermittelt werden können, und zum anderen wird über die Steuerungseinheit 221, wie zu den Figuren 1 und 2 erörtert, eine Ventilkombination eingestellt, damit wahlweise der eine oder andere Gang des Doppelkupplungsgetriebes ein- und ausgelegt werden kann bzw. eine Kupplung 25, 27, 125, 127 in Trennstellung verbleibt, während die andere bei Bedarf einen Kraftschluss zulässt. In dem Getriebe 213 können unterschiedliche Gänge durch die Auswahl von Radsätzen 217 bzw. der Wahl einzulegender Getriebezahnräder 219 durch das Schalten von Schaltmuffen 205, 205^{I} eingelegt werden.

Wie aus den Beschreibungen zu entnehmen ist, zeigt die erfindungsgemäße Hydrauliksteuerung 1, 100 zahlreiche Vorteile. Es können verschiedenste Ausfälle exerziert werden, trotz alledem bleiben Grundfunktionen des Doppelkupplungsgetriebes erhalten. Ein Antrieb von der Kurbelwelle einer Antriebsmaschine 223 auf die Straßenräder 227 durch das Differential 229 und durch die Halbachsen 231 ist weiterhin möglich. Ein so aufgebautes Getriebe 213 in der Form eines Doppelkupplungsgetriebes behält einen so genannten "Limb home mode", selbst wenn einzelne Ventile 3, 5, 7, 9, 41, 47, 103, 105, 107, 109, 141, 147 ausfallen sollten. Im Übrigen wird durch den Drucköl-Wärmetauscher 49, 149 und den daran angeschlossenen zahlreichen Ölkreisläufen 53, 53', 53'', 53''', 153, 153', 153'', 153''', 161 bedarfsgerecht gekühltes Hydraulikmittel an die Stellen und die Aktuatoren gebracht, die vorteilhaft mit gekühltem Hydraulikmittel arbeiten können. Gleichzeitig ist der Hydraulikplan recht einfach strukturiert, sodass ein so gearteter Hydraulikplan sowohl bei großvolumigen und bei leistungsstarken Antriebssträngen als auch bei Kleinwagen verbaut werden kann.

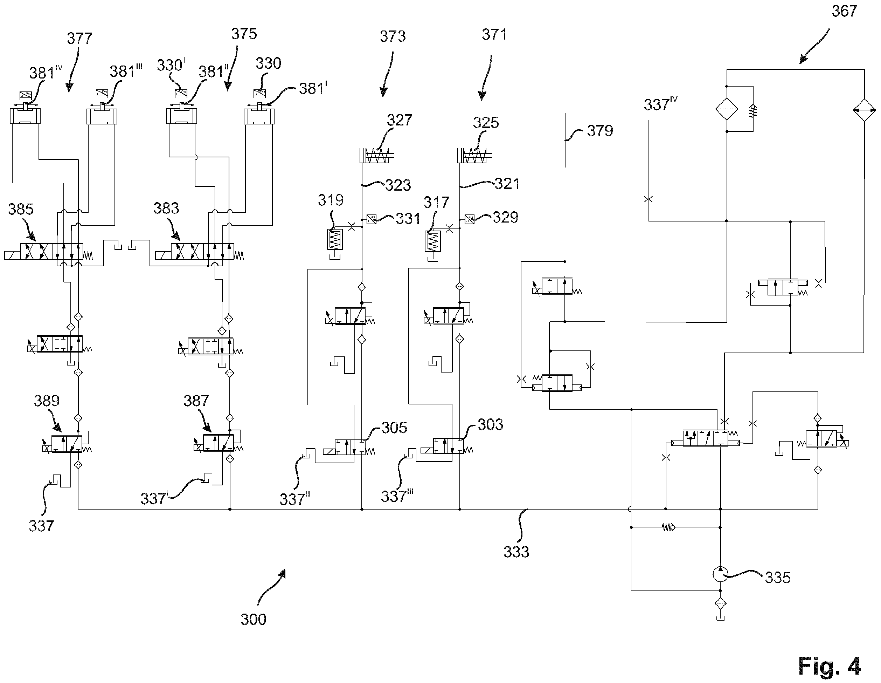

Figur 4 zeigt einen beispielhaften Hydraulikplan eines Getriebes. Die hydraulische Steuerung 300 eines entsprechenden Getriebes, das z. B. in Figur 3 zu sehen ist, weist einzelne Stränge 371, 373, 375, 377, 379 auf. Jeder Strang 371, 373, 375, 377, 379 übernimmt eine für ihn bestimmte Aufgabe. Die Stränge 371, 373 sind für die hydraulische Betätigung einer ersten Kupplung 325 und einer zweiten Kupplung 327 bzw. eines ersten Betätigungszylinders einer ersten Kupplung 325 und eines zweiten Betätigungszylinders einer zweiten Kupplung 327 bestimmt. Die Stränge 371, 373 haben zwar Steuer- und Schaltventile sowie hydraulische Hilfskomponente, jedoch keine weiteren Aktuatoren, bis auf die Kupplungen 325, 327. Die hydraulische Steuerung 300 weist an der Druckversorgungsleitung 333 einzelne Ventile 303, 305, 387, 389 auf. Die Ventile 303, 305, 387, 389 sind so gestaltet, dass zur Entlastung Hydraulikmittel aus dem jeweiligen Strang 371, 373, 375, 377 über das dem jeweiligen Strang zugeordnete Ventil 303, 305, 387, 389 zu den Tankverbindungen 337, 337', 337", 337^{III} abgeleitet werden kann. Die Stränge 375, 377 können mithilfe der Gangwahlventile 383, 385 Gangsteller 381^{I}, 381", 381^{III}, 381^{IV} betätigen. Mithilfe von Positionierungssensoren 330, 330^{I} kann die exakte Position eines Gangstellers 381^{I}, 381" bestimmt werden. Die Sperrventile 303, 305, 387, 389 können als Schaltventile (303, 305) oder auch als Proportionalregelventile (387, 389) gestaltet sein. Der Strang 371 ist ausschließlich für die Betätigung der Kupplung 325 erstellt. Der Strang 371 ist ausschließlich für die Aktuierung der Kupplung 327 vorgesehen. Zur Unterdrückung von Schwingungen bei nur einem Verbraucher, der Kupplung 325, 327, in einem Strang 325, 327 ist ein Zwischenspeicher 317, 319 in dem jeweiligem Strang 371, 373 vorhanden. Die Kupplungszuleitung 321 mündet in der Kupplung 325. Die Kupplungszuleitung 323 mündet in der Kupplung 327. Weitere Stränge wie der Strang 379 können vorgesehen sein, um mithilfe der hydraulischen Steuerung 300 weitere Aktuatoren (nicht dargestellt) zu bedienen. Der Druckölaufbereitungskreislauf 367 bereitet einen Teil des durch die Öldruckpumpe 335 geförderten Hydraulikmittels auf. Dadurch gelangt aufbereitetes Hydraulikmittel in die Druckversorgungsleitung 333. Überschüssiges Hydraulikmittel kann zum Tank 337^{IV} abgeleitet werden. Die Stränge 371, 373 sind mithilfe der Ventile 303, 305 gegenüber der Druckversorgungsleitung 333 absperrbar. Probleme in einer Kupplung, z. B. der Kupplung 325, wirken sich nicht auf die übrigen Stränge 373, 375, 377, 379 aus. Sobald einer der Positionssensoren 329, 331 einen Fehlerfall oder einen ungewöhnlichen Zustand an das (in Figur 4 nicht dargestellte) Steuergerät meidet. Der jeweilige Aktuator 325, 327 ist durch das Sperrventil 303, 305 gegenüber allen anderen Aktuatoren 381^{I}, 381^{II}, 381^{III}, 381^{IV} entkoppelt. Eine hydraulische Steuerung wie die hydraulische Steuerung 300 folgt einem Trennebenen-System.

Die Bohrungen in den einzelnen Ventilen, wie den Ventilen 303, 305, 387, 389, 383, 385, können so gestaltet werden, dass das Verhalten des Aktuators nach einem Druckölversorgungszusammenbruch, z. B. durch eine unzureichende Versorgung aus der zentralen Druckversorgungsleitung 333, ein verzögertes An- oder Absprechverhalten aufweist.

**Bezugszeichenliste:**

| Bezugszeichen | Bedeutung |
|---|---|
| 1, 100, 300 | Hydraulische Steuerung |
| 3, 103, 303 | Ventil, insbesondere Sperrventil |
| 3-1, 103-1 | erster Zustand |
| 3-2, 103-2 | zweiter Zustand |
| 5, 105. 305 | Ventil, insbesondere Sperrventil |
| 5-1, 105-1 | erster Zustand |
| 5-2, 105-2 | zweiter Zustand |
| 7, 107 | erstes Proportional-Regelventil |
| 9, 109 | zweites Proportional-Regelventil |
| 11, 11^{I}, 11^{II}, 11^{III}, 11^{IV}, 11^{V}, 111, 111^{I}, 111^{II}, 111^{III}, 111^{IV}, 111^{V} | Feder, insbesondere Schraubenfeder als Nullstellungsfeder |
| 13, 13^{I}, 113, 113^{I} | Magnet, insbesondere pulsweitenmoduliert ansteuerbarer Steuermagnet |
| 15, 15^{I}, 115, 115^{I} | Magnet, insbesondere pulsweitenmoduliert ansteuerbarer Steuermagnet als Proportional-Regler |
| 17, 117, 317 | erster Zwischenspeicher |
| 19, 119, 319 | zweiter Zwischenspeicher |
| 21, 121, 321 | erste Kupplungszuleitung |
| 23, 123, 323 | zweite Kupplungszuleitung |
| 25, 125, 325 | erste Kupplung, insbesondere erster Betätigungszylinder einer Kupplung |
| 27, 127, 327 | zweite Kupplung, insbesondere zweiter Betätigungszylinder einer Kupplung |
| 29, 129, 329 | Positionierungssensor, insbesondere als Drucksensor |
| 330, 330^{I} | Positionierungssensor, insbesondere als Spannungssensor |
| 31, 131, 331 | Positionierungssensor, insbesondere Drucksensor |
| 33, 133, 333 | Druckversorgungsleitung |
| 35, 135, 335 | Öldruckpumpe |
| 37, 37^{I}, 37^{II}, 137, 137', 137^{II}, 337, | Tank bzw. Ölsumpf |
| 337^{I}, 337^{II}, 337^{III}, 337^{IV} 39, 39^{I}, 39^{II}, 39^{III}, 139, 139^{I}, 139^{II}, 139^{III} | Filter |
| 41, 141 | Druckölumlaufventil |
| 43, 143 | Überdrucksicherheitsventil, insbesondere als Druckregelventil |
| 45, 145 | Speicher |
| 47, 147 | Hauptdruckregler |
| 49, 149 | Drucköl-Wärmetauscher |
| 51, 151 | Druckölfilter, insbesondere Wärmetauscherfilter |
| 53, 53^{I}, 53^{II}, 53^{III}, 153, 153^{I}, 153^{II}, 153^{III}, | Ölkreislauf |
| 155 | Ventil, insbesondere zur Durchflusssteuerung |
| 157 | erste Bypass-Leitung |
| 159 | zweite Bypass-Leitung |
| 161 | Zirkulation, insbesondere Kühlungszirkulation |
| 63, 163 | Zuleitung, insbesondere zu dem ersten Proportional-Regelventil |
| 65, 165 | Zuleitung, insbesondere zu dem zweiten Proportional-Regelventil |
| 67, 167, 367 | Druckölaufbereitungskreislauf |
| 69, 169 | Durchflusssteuerung wie Drossel |
| | |
| 201 | Antriebsstrang |
| 203 | Radachse |
| 205, 205' | Schiebemuffe |
| 207 | erste Kupplung |
| 209 | zweite Kupplung |
| 211 | Doppelkupplungspaket |
| 213 | Doppelkupplungsgetriebe |
| 215 | Teilgetriebe |
| 217 | Radsatz |
| 219 | Getriebezahnrad |
| 221 | Steuergerät |
| 223 | Antriebsmaschine wie Verbrennungskraftmaschine |
| 225 | Positionierungssensor |
| 227 | Rad, insbesondere Straßenrad |
| 229 | Differentialgetriebe, auch kurz Differential genannt |
| 231 | Halbachse |
| | |
| A | erster Arbeitsanschluss oder Arbeitsport |
| B | zweiter Arbeitsanschluss oder Arbeitsport |
| P | Anschluss oder Port für eine Druckmittelzuleitung |
| T | Anschluss oder Port für eine Druckmittelableitung |
| | |
| 371 | erster Strang |
| 373 | zweiter Strang |
| 375 | dritter Strang |
| 377 | vierter Strang |
| 379 | fünfter Strang |
| 381^{I}, 381^{II}, 381^{III} 381^{IV} | Gangsteller |
| 383 | erstes Gangwahlventil |
| 385 | zweites Gangwahlventil |
| 387 | drittes Sperrventil, insbesondere Druckabschalt- und Entlastungsventil |
| 389 | viertes Sperrventil, insbesondere Druckabschalt- und Entlastungsventil |

## Patentansprüche

1. Hydraulische Steuerung (1, 100) eines Doppelkupplungsgetriebes (213) mit einer ersten hydraulischen Kupplung (25, 125, 207) und einer zweiten hydraulischen Kupplung (27, 127, 209), die mit einem unter Druck stehenden Hydraulikmedium zu betätigen sind, und zwei Proportional-Regelventile (7, 107; 9, 109), jeweils ein Proportional-Regelventil (7, 107; 9, 109) für eine Kupplung (25, 125, 207; 27, 127, 209), die einen individuellen Schließgrad der dem Proportional-Regelventil (7, 107; 9, 109) als Aktuator zugeordneten Kupplung (25, 125, 207; 27, 127, 209) erlauben, wobei
jede Kupplung (25, 125, 207; 27, 127, 209) einzeln in einem hydraulischen Strang angeordnet ist, und der dadurch gegenüber einer Druckversorgungsleitung (33, 133) absperrbar ist, dass
zwischen den Proportional-Regelventilen (7, 107; 9, 109) und der zentral angeordneten Druckversorgungsleitung (33, 133) jeweils ein einziges, eine zusätzliche Trennebene bildendes Ventil (3, 103; 5, 105 ) zwischengeschaltet ist, das mit einem elektrisch betätigbaren Steuerschieber zur Ansteuerung durch ein Steuergerät ausgestattet ist und das in einem Zustand (3-1, 103-1; 5-1, 105-1) eine Abkopplung der Druckversorgungsleitung (33, 133) von dem ihm hydraulisch nachgeschalteten Proportional-Regelventil (7, 107; 9, 109) sicherstellt und so in jedem einzelnen hydraulischen Strang (21, 23, 121, 123) den jeweiligen Aktuator (25, 125, 205; 27, 127, 205') entkoppelt,
**dadurch gekennzeichnet, dass**
als Proportional-Regelventile Proportional-Druckregelventile (7, 107, 9, 109) vorgesehen sind.

2. Hydraulische Steuerung (1, 100) nach Anspruch 1,
**dadurch gekennzeichnet, dass**
wenigstens eines der die Trennebene bildenden Ventile (3, 103; 5, 105) ein Sperrventil ist.

3. Hydraulische Steuerung (1, 100) nach Anspruch 2,
**dadurch gekennzeichnet, dass**
wenigstens eines der die Trennebene bildenden Ventile (3, 103; 5, 105) ein Sperrventil in der Form eines Schaltventils ist.

4. Hydraulische Steuerung (1, 100) nach Anspruch 2 oder 3,
**dadurch gekennzeichnet, dass**
wenigstens eines der die Trennebene bildenden Ventile (3, 103; 5, 105) ein Sperrventil ist, das in einer ansteuerungslosen Sicherheitsstellung (3-1, 103-1; 5-1, 105-1) eine Trennung der Druckversorgungsleitung (33, 133) von dem Proportional-Druckregelventil (7, 107; 9, 109) durchführt.

5. Hydraulische Steuerung (1, 100) nach einem der vorhergehenden Ansprüche,
**dadurch gekennzeichnet, dass**
wenigstens eines der die Trennebenen bildenden Ventile (3, 103; 5, 105) ein federvorgespanntes 4/2-Ventil (103, 105) ist.

6. Hydraulische Steuerung (1, 100) nach einem der vorhergehenden Ansprüche,
**dadurch gekennzeichnet, dass**
wenigstens eines der die Trennebenen bildenden Ventile (3, 103; 5, 105) ein federvorgespanntes 2/2-Ventil (3, 5) ist.

7. Hydraulische Steuerung (1, 100) nach einem der vorhergehenden Ansprüche,
**dadurch gekennzeichnet, dass**
die die Trennebenen bildenden Ventile (3, 103; 5, 105) in einem ersten Zustand (3-1, 103-1; 5-1, 105-1) eine Abkoppelung der Druckversorgungsleitung (33, 133) von einer Zuleitung zu den Proportional-Druckregelventilen (7, 107; 9, 109) vornehmen.

8. Hydraulische Steuerung (1, 100) nach Anspruch 7,
**dadurch gekennzeichnet, dass**
die die Trennebenen bildenden Ventile (3, 103; 5, 105) in einem zweiten Zustand (3-2, 103-2; 5-2, 105-2) eine hydraulische Durchschaltung des Drucks von der Druckversorgungsleitung (33, 133) auf einen Versorgungseingang (P) der Proportional-Druckregelventile (7, 107; 9, 109) erlauben.

9. Hydraulische Steuerung (1, 100) nach einem der vorhergehenden Ansprüche,
**dadurch gekennzeichnet, dass**
ein Arbeitsanschluss (A, B) wenigstens eines der die Trennebenen bildenden Ventile (3, 103; 5, 105) an einer Bypass-Leitung (157; 159) zu einer Kupplungszuleitung (21, 121; 23, 123) angeschlossen ist.

10. Hydraulische Steuerung (1, 100) nach Anspruch 9,
**dadurch gekennzeichnet, dass**
die Kupplungszuleitung (21, 121; 23, 123) gegenüber einem Tank (37, 37^{I}, 37^{II}, 137, 137^{I}, 137^{II}) entlastbar ist.

11. Hydraulische Steuerung (1, 100) nach Anspruch 10,
**dadurch gekennzeichnet, dass**
die Kupplungszuleitung (21, 121; 23, 123) gegenüber dem Tank (37, 37^{I}, 37^{II}, 137, 137', 137") in dem ersten Zustand (3-1, 103-1; 5-1, 105-1) des die Trennebenen bildenden Ventils (3, 103; 5, 105) entlastbar ist.

12. Hydraulische Steuerung (1, 100) nach einem der vorhergehenden Ansprüche, **dadurch gekennzeichnet, dass**
wenigstens eine der Kupplungszuleitungen (21, 121; 23, 123) mit einem Zwischenspeicher (17, 117; 19, 119) in hydraulisch kommunikativer Verbindung steht.

13. Hydraulische Steuerung (1, 100) nach Anspruch 12,
**dadurch gekennzeichnet, dass**
der Zwischenspeicher (17, 117; 19, 119) in der Kupplungszuleitung (21, 121; 23, 123) als federvorgespannter Hohlraum zur Dämpfungsregelung von Druckschwingungen in dem Hydraulikmittel vorgesehen ist.

14. Hydraulische Steuerung (1, 100) nach einem der vorhergehenden Ansprüche,
**dadurch gekennzeichnet, dass**
die Proportional-Druckregelventile (7, 107; 9, 109) federvorgespannte Ventile mit elektrisch einstellbaren Magneten (15, 115; 15', 115') sind, wodurch ein individueller Schließgrad der jeweiligen Kupplung (125, 207, 209) durch eine elektrische Ansteuerung des jeweiligen Proportional-Druckregelventils (7, 107; 9, 109) einstellbar ist.

15. Verfahren zum Betrieb einer hydraulischen Steuerung (1, 100) nach einem der
Ansprüche 1 bis 14,
**dadurch gekennzeichnet, dass**
in einem Fehlerfall mit Hilfe von den Trennebenen bildenden Ventilen (3, 103; 5, 105) eine Hydraulikmittelversorgung für die Proportional-Druckregelventile (7, 107; 9, 109) für jeden einzelnen hydraulischen Strang (21, 23, 121, 123) des jeweiligen Aktuators abkoppelbar ist.

## Claims

1. A hydraulic control (1, 100) of a double-clutch transmission (213) having a first hydraulic clutch (25, 125, 207) and a second hydraulic clutch (27, 127, 209) that are to be actuated using a pressurised hydraulic medium, and two proportional regulating valves (7, 107; 9, 109), in each case a proportional regulating valve (7, 107; 9, 109) for a clutch (25, 125, 207; 27, 127, 209), that permit an individual degree of closure of the clutch (25, 125, 207; 27, 127, 209) assigned to the proportional regulating valve (7, 107; 9, 109) as actuator,
wherein each clutch (25, 125, 207; 27, 127, 209) is individually arranged in a hydraulic string and that being closable relative to a pressure-supply line (33, 133) as a result of that there is connected in-between the proportional regulating valves (7, 107; 9, 109) and the centrally arranged pressure-supply line (33, 133) in each case a single valve (3, 103; 5, 105) forming a plane of separation in addition and being equipped with an electrically actuatable control slide valve for driving by a control unit and that in a state (3-1, 103-1; 5-1, 105-1) ensures a decoupling of the pressure-supply line (33, 133) from the proportional regulating valve (7, 107; 9, 109) hydraulically connected downstream of the control unit and thus in each individual hydraulic string (21, 23, 121, 123) decouples the respective actuator (25, 125, 205; 27, 127, 205'),
**characterised in that**
as proportional regulating valves there are provided proportional pressure-regulating valves (7, 107; 9, 109).

2. The hydraulic control (1, 100) according to Claim 1,
**characterised in that**
at least one of the valves (3, 103; 5, 105) forming the plane of separation is a check valve.

3. The hydraulic control (1, 100) according to Claim 2,
**characterised in that**
at least one of the valves (3, 103; 5, 105) forming the plane of separation is a check valve in the form of a switch valve.

4. The hydraulic control (1, 100) according to Claim 2 or 3,
**characterised in that**
at least one of the valves (3, 103; 5, 105) forming the plane of separation is a check valve that in a safety position (3-1, 103-1; 5-1, 105-1) without driving carries out a separation of the pressure-supply line (33, 133) from the proportional pressure-regulating valve (7, 107; 9, 109).

5. The hydraulic control (1, 100) according to one of the preceding claims,
**characterised in that**
at least one of the valves (3, 103; 5, 105) forming the planes of separation is a spring-loaded 4/2 valve (103, 105).

6. The hydraulic control (1, 100) according to one of the preceding claims,
**characterised in that**
at least one of the valves (3, 103; 5, 105) forming the planes of separation is a spring-loaded 2/2 valve (3, 5).

7. The hydraulic control (1, 100) according to one of the preceding claims,
**characterised in that**
the valves (3, 103; 5, 105) forming the planes of separation in a first state (3-1, 103-1; 5-1, 105-1) carry out a decoupling of the pressure-supply line (33, 133) from a feed line to the proportional pressure-regulating valves (7, 107; 9, 109).

8. The hydraulic control (1, 100) according to Claim 7,
**characterised in that**
the valves (3, 103; 5, 105) forming the planes of separation in a second state (3-2, 103-2; 5-2, 105-2) permit a hydraulic through-connection of the pressure from the pressure-supply line (33, 133) to a supply port (P) of the proportional pressure-regulating valves (7, 107; 9, 109).

9. The hydraulic control (1, 100) according to one of the preceding claims,
**characterised in that**
a working port (A, B) of at least one of the valves (3, 103; 5, 105) forming the planes of separation is connected at a bypass line (157; 159) to a clutch feed line (21, 121; 23, 123).

10. The hydraulic control (1, 100) according to Claim 9,
**characterised in that**
the clutch feed line (12, 121; 23, 123) can be relieved relative to a reservoir (37, 37', 37", 137, 137', 137").

11. The hydraulic control (1, 100) according to Claim 10,
**characterised in that**
the clutch feed line (12, 121; 23, 123) can be relieved relative to the reservoir (37, 37', 37", 137, 137', 137") in the first state (3-1, 103-1; 5-1, 105-1) of the valve (3, 103; 5, 105) forming the planes of separation.

12. The hydraulic control (1, 100) according to one of the preceding claims,
**characterised in that**
at least one of the clutch feed lines (21, 121; 23, 123) is in a hydraulic communicative connection with an intermediate storage facility (17, 117; 19, 119).

13. The hydraulic control (1, 100) according to Claim 12,
**characterised in that**
the intermediate storage facility (17, 117; 19, 119) is provided in the clutch feed line (21, 121; 23, 123) as a spring-loaded cavity for regulating the damping of pressure oscillations in the hydraulic medium.

14. The hydraulic control (1, 100) according to one of the preceding claims,
**characterised in that**
the proportional pressure-regulating valves (7, 107; 9, 109) are spring-loaded valves having electrically adjustable magnets (15, 115; 15', 115'), as a result of which an individual degree of closure of the respective clutch (125, 207, 209) can be adjusted by electrically driving the respective proportional pressure-regulating valve (7, 107; 9, 109).

15. A method for operating a hydraulic control (1, 100) according to one of Claims 1 to 14,
**characterised in that**
in the case of a fault, with the aid of valves (3, 103; 5, 105) forming the planes of separation, a hydraulic-medium supply for the proportional pressure-regulating valves (7, 107; 9, 109) can be decoupled for each individual hydraulic string (21, 23, 121, 123) of the respective actuator.

## Revendications

1. Commande hydraulique (1, 100) d'une boîte de vitesses à double embrayage (213) avec un premier embrayage hydraulique (25, 125, 207) et un second embrayage hydraulique (27, 127, 209) qui doivent être actionnés avec un fluide hydraulique sous pression et deux vannes de régulation proportionnelles (7, 107 ; 9, 109), une vanne de régulation proportionnelle (7, 107 ; 9, 109) pour chaque embrayage (25, 225, 207 ; 27, 127, 209), qui permettent un degré de fermeture individuel de l'embrayage associé (25, 225, 207 ; 27, 127, 209) en tant qu'actionneur à la vanne de régulation proportionnelle (7, 107 ; 9, 109), cependant que chaque embrayage (25, 225, 207 ; 27, 127, 209) est placé individuellement dans une ligne hydraulique et qui peut être bloqué par rapport à une conduite d'alimentation en pression (33, 133), cependant qu'une seule vanne (3, 103 ; 5, 105) qui forme un plan de séparation supplémentaire est interposée entre les vannes de régulation proportionnelles (7, 107 ; 9, 109) et la conduite d'alimentation en pression placée de manière centrale (33, 133), vanne qui est équipée d'un tiroir de commande pouvant être actionné électriquement pour être commandé par un appareil de commande et qui, dans un état (3-1, 103-1 ; 5-1, 105-1), assure un découplage de la conduite d'alimentation en pression (33, 133) de la vanne de régulation proportionnelle (7, 107 ; 9, 109) montée hydrauliquement en aval de celle-ci et découple ainsi l'actionneur respectif (25, 125, 205 ; 27, 127, 205') dans chaque ligne hydraulique individuelle (21, 23, 121, 123), **caractérisée en ce que** des régulateurs de pression proportionnels (7, 107 ; 9, 109) sont prévus comme vannes de régulation proportionnelles.

2. Commande hydraulique (1, 100) selon la revendication 1, **caractérisée en ce qu'**au moins l'une des vannes (3, 103 ; 5, 105) qui forment le plan de séparation est une vanne d'arrêt.

3. Commande hydraulique (1, 100) selon la revendication 2, **caractérisée en ce qu'**au moins l'une des vannes (3, 103 ; 5, 105) qui forment le plan de séparation est une vanne d'arrêt sous forme de vanne de commutation

4. Commande hydraulique (1, 100) selon la revendication 2 ou 3, **caractérisée en ce qu'**au moins l'une des vannes (3, 103 ; 5, 105) qui forment le plan de séparation est une vanne d'arrêt qui, dans une position de sécurité sans commande (3-1, 103-1 ; 5-1, 105-1), exécute une séparation de la conduite d'alimentation en pression (33, 133) de la vanne de régulation proportionnelle (7, 107 ; 9, 109).

5. Commande hydraulique (1, 100) selon l'une des revendications précédentes, **caractérisée en ce qu'**au moins l'une des vannes (3, 103 ; 5, 105) qui forment les plans de séparation est une vanne 4/2 voies (103, 105) précontrainte par un ressort.

6. Commande hydraulique (1, 100) selon l'une des revendications précédentes, **caractérisée en ce qu'**au moins l'une des vannes (3, 103 ; 5, 105) qui forment les plans de séparation est une vanne 2/2 voies (3, 5) précontrainte par un ressort.

7. Commande hydraulique (1, 100) selon l'une des revendications précédentes, **caractérisée en ce que** les vannes (3, 103 ; 5, 105) qui forment les plans de séparation effectuent, dans un premier état (3-1, 103-1 ; 5-1, 105-1), un découplage de la conduite d'alimentation en pression (33, 133) d'une conduite d'amenée aux régulateurs de pression proportionnels (7, 107 ; 9, 109).

8. Commande hydraulique (1, 100) selon la revendication 7, **caractérisée en ce que** les vannes (3, 103 ; 5, 105) qui forment les plans de séparation permettent, dans un second état (3-2, 103-2 ; 5-2, 105-2), une commutation hydraulique directe de la pression de la conduite d'alimentation en pression (33, 133) à une entrée d'alimentation (P) des régulateurs de pression proportionnels (7, 107 ; 9, 109).

9. Commande hydraulique (1, 100) selon l'une des revendications précédentes, **caractérisée en ce qu'**un raccord de travail (A, B) d'au moins l'une des vannes (3, 103 ; 5, 105) qui forment les plans de séparation est raccordé à une conduite de dérivation (157 ; 159) vers une conduite d'alimentation de l'embrayage (21, 121 ; 23, 123).

10. Commande hydraulique (1, 100) selon la revendication 9, **caractérisée en ce que** la conduite d'alimentation de l'embrayage (21, 121 ; 23, 123) peut être délestée par rapport à un réservoir (37, 37', 37", 137, 137', 137").

11. Commande hydraulique (1, 100) selon la revendication 10, **caractérisée en ce que** la conduite d'alimentation de l'embrayage (21, 121 ; 23, 123) peut être délestée par rapport au réservoir (37, 37', 37", 137, 137', 137") dans le premier état (3-1, 103-1 ; 5-1, 105-1) de la vanne (3, 103 ; 5, 105) qui forme les plans de séparation.

12. Commande hydraulique (1, 100) selon l'une des revendications précédentes, **caractérisée en ce qu'**au moins l'une des conduites d'alimentation de l'embrayage (21, 121 ; 23, 123) est en relation de communication hydraulique avec un réservoir intermédiaire (17, 117 ; 19, 119).

13. Commande hydraulique (1, 100) selon la revendication 12, **caractérisée en ce que** le réservoir intermédiaire (17, 117 ; 19, 119) est prévu dans la conduite d'alimentation de l'embrayage (21, 121 ; 23, 123) en tant que cavité creuse précontrainte par ressort pour le réglage de l'amortissement d'oscillations de pression dans le fluide hydraulique.

14. Commande hydraulique (1, 100) selon l'une des revendications précédentes, **caractérisée en ce que** les régulateurs de pression proportionnels (7, 107 ; 9, 109) sont des vannes précontraintes par pression avec des aimants réglables électriquement (15, 115 ; 15', 115') si bien qu'un degré de fermeture individuel de l'embrayage respectif (125, 207, 209) peut être réglé par une commande électrique du régulateur de pression proportionnel respectif (7, 107 ; 9, 109).

15. Procédé pour le fonctionnement d'une commande hydraulique (1, 100) selon l'une des revendications 1 à 14, **caractérisé en ce qu'**en cas de défaut, une alimentation en fluide hydraulique pour les régulateurs de pression proportionnels (7, 107 ; 9, 109) peut être découplée pour chaque ligne hydraulique individuelle (21, 23, 121, 123) de l'actionneur respectif à l'aide des vannes (3, 103 ; 5, 105) qui forment des plans de séparation.
